# EUROPÄISCHE PATENTSCHRIFT

(11) **EP 2 454 703 B1**
(45) Veröffentlichungstag und Bekanntmachung des Hinweises auf die Patenterteilung: **20.11.2019**
(21) Anmeldenummer: 10731746.3
(22) Anmeldetag: 13.07.2010
(51) Int. Cl.: G06F 21/33, G06F 21/62, H04L 29/06

(54) **VERFAHREN ZUM LESEN VON ATTRIBUTEN AUS EINEM ID-TOKEN**
METHOD FOR READING ATTRIBUTES FROM AN ID TOKEN
PROCÉDÉ DE LECTURE D'ATTRIBUTS CONTENUS DANS UN JETON D'IDENTIFICATION

(30) Priorität: 14.07.2009 DE 102009027681
(43) Veröffentlichungstag der Anmeldung: 23.05.2012
(73) Patentinhaber: Bundesdruckerei GmbH, 10958 Berlin (DE)
(72) Erfinder: DIETRICH, Frank, 12437 Berlin (DE)
(74) Vertreter: Richardt Patentanwälte PartG mbB
(86) Internationale Anmeldenummer: PCT/EP2010/060066
(87) Internationale Veröffentlichungsnummer: WO 2011/006895

(56) Entgegenhaltungen:
- US-A1- 2001 045 451
- "Technische Richtlinie eID-Server" TECHNISCHE RICHTLINIE EID-SERVER, BUNDESAMT FÜR SICHERHEIT IN DER INFORMATIONSTECHNIK, DE, Nr. BSI TR-03130 Version: 1.0 RC1, 19. Mai 2009 (2009-05-19), Seiten 1-48, XP007915025
- KAIN M ET AL: "SAML 2.0, ein Tutorium - Teil 1: Theorie" XMLSPEKTRUM, 2007, Seiten 55-59, XP007915026
- "Technische Richtlinie TR-03127 Architektur Elektronischer Personalausweis" TECHNISCHE RICHTLINIE TR-03127, BUNDESAMT FÜR SICHERHEIT IN DER INFORMATIONSTECHNIK, DE, Nr. Version 0.5, 17. April 2009 (2009-04-17), Seiten 1-37, XP007914804

## Beschreibung

Die Erfindung betrifft ein Verfahren zum Lesen von zumindest einem Attribut aus einem ID-Token, ein Computerprogrammprodukt, einen ID-Token sowie ein Computersystem.

Aus dem Stand der Technik sind verschiedene Verfahren zur Verwaltung der so genannten digitalen Identität eines Benutzers bekannt:
Microsoft Windows CardSpace ist ein Client-basiertes digitales Identitätssystem, welches es Internetbenutzern ermöglichen soll, deren digitale Identität gegenüber Online-Diensten mitzuteilen. Nachteilig ist hierbei unter anderem, dass der Nutzer seine digitale Identität manipulieren kann.

Bei OPENID handelt es sich dagegen um ein Server-basiertes System. Ein so genannter Identity-Server speichert eine Datenbank mit den digitalen Identitäten der registrierten Nutzer. Nachteilig ist hieran unter anderem ein mangelhafter Datenschutz, da die digitalen Identitäten der Nutzer zentral gespeichert werden und das Nutzerverhalten aufgezeichnet werden kann.

Aus US 2007/0294431 A1 ist ein weiteres Verfahren zur Verwaltung der digitalen Identitäten bekannt, welches ebenfalls eine Nutzerregistrierung erfordert.

Token-basierte Authentifizierungsverfahren sind in den zum Anmeldezeitpunkt unveröffentlichten Patentanmeldungen DE 10 2008 000 067.1-31, DE 10 2008 040 416.0-31, DE 10 2008 042 262.2-31 und DE 10 2009 026 953.3 derselben Patentanmelderin offenbart.

Die technische Richtlinie des Bundesamts für Sicherheit in der Informationstechnik "Technische Richtlinie eID-Server", Nr. BSI TR-03130 Version: 1.0 RC1, 19. Mai 2009 beschreibt eine Realisierung eines eID-Server, um eine Nutzung einer elektronischen Identitätsfunktion in Web-Anwendungen zu vereinfachen. Der eID-Server stellt eine einfache Schnittstelle für Web-Anwendungen bereit, um die Komplexität der elektronischen Identitätsfunktion zu kapseln.

Die US 2001/045451 A1 beschreibt ein Verfahren und System für eine token-basierte Nutzerzugriffsauthentifizierung, welche einen sicheren Nutzerzugriff auf einen Webserver unter Verwendung eines Tokens, beispielsweise einer Smartcard, ermöglicht und einen Einmalanmeldemechanismus bereitstellt, der im Anmeldeprozess keinen Benutzernamen und kein Passwort verwendet. Stattdessen ermöglicht es eine Smartcard mit einem Zertifikat dem Nutzer sich an einem Client-Arbeitsplatz anzumelden, indem er sich mit einer persönlichen Identifikationsnummer (PIN) gegenüber der Smartcard authentifiziert. Die Smartcard verwendet dann eine gegenseitige Authentifizierung, um die Identität des Karteninhabers und des Zugangsservers zu verifizieren und stellt eine sichere Verbindung zwischen der Client-Workstation und dem Zugangsserver mit dem SSL-Protokoll her.

Der Erfindung liegt demgegenüber die Aufgabe zugrunde, ein verbessertes Verfahren zum Lesen zumindest eines Attributs zu schaffen, sowie ein entsprechendes Computerprogrammprodukt, einen ID-Token und ein Computersystem.

Die der Erfindung zugrunde liegenden Aufgaben werden jeweils mit den Merkmalen der unabhängigen Patentansprüche gelöst. Ausführungsformen der Erfindung sind in den abhängigen Ansprüchen angegeben.

Erfindungsgemäß wird ein Verfahren zum Lesen zumindest eines in einem ID-Token gespeicherten Attributs geschaffen, wobei der ID-Token einem Nutzer zugeordnet ist. Das Verfahren beinhaltet die folgenden Schritte: Authentifizierung des Nutzers gegenüber dem ID-Token; Authentifizierung eines ersten Computersystems gegenüber dem ID-Token; nach erfolgreicher Authentifizierung des Nutzers und des ersten Computersystems gegenüber dem ID-Token, Lesezugriff des ersten Computersystems auf das zumindest eine in dem ID-Token gespeicherte Attribut zur Übertragung des zumindest einen Attributs an ein zweites Computersystem, Erzeugung einer Zeitangabe für das zumindest eine Attribut durch das erste Computersystem. Hierdurch kann ein "Vertrauensanker" geschaffen werden.

Die Erfindung ermöglicht das Lesen eines oder mehrerer der in einem ID-Token gespeicherten Attribute durch das erste Computersystem, wobei die Verbindung zwischen dem ID-Token und dem ersten Computersystem über ein Netzwerk, insbesondere das Internet, aufgebaut werden kann. Bei dem zumindest einem Attribut kann es sich um eine Angabe bezüglich der Identität des dem ID-Token zugeordneten Nutzers handeln, insbesondere bezüglich dessen so genannter digitaler Identität. Beispielsweise werden durch das erste Computersystem die Attribute Name, Vorname, Adresse gelesen, um diese Attribute an ein zweites Computersystem, zum Beispiel eines Online-Dienstes, weiterzuleiten.

Es kann aber zum Beispiel auch nur ein einzelnes Attribut gelesen werden, welches nicht zur Feststellung der Identität des Nutzers, sondern beispielsweise zur Überprüfung der Berechtigung des Benutzers zur Inanspruchnahme eines bestimmten Online-Dienstes dient, wie zum Beispiel das Alter des Nutzers, wenn dieser einen Online-Dienst in Anspruch nehmen möchte, der einer bestimmten Altersgruppe vorbehalten ist, oder ein anderes Attribut, welches die Zugehörigkeit des Nutzers zu einer bestimmten Gruppe dokumentiert, welche zur Nutzung des Online-Dienstes berechtigt ist.

Bei dem ID-Token kann es sich um ein tragbares elektronisches Gerät, wie zum Beispiel einen so genannten USB-Stick, handeln oder um ein Dokument, insbesondere ein Wert- oder Sicherheitsdokument.

Unter einem "Dokument" werden erfindungsgemäß papierbasierte und/oder kunststoffbasierte Dokumente verstanden, wie zum Beispiel Ausweisdokumente, insbesondere Reisepässe, Personalausweise, Visa sowie Führerscheine, Fahrzeugscheine, Fahrzeugbriefe, Firmenausweise, Gesundheitskarten oder andere ID-Dokumente sowie auch Chipkarten, Zahlungsmittel, insbesondere Bankkarten und Kreditkarten, Frachtbriefe oder sonstige Berechtigungsnachweise, in die ein Datenspeicher zur Speicherung des zumindest einen Attributs integriert ist.

Ausführungsformen der Erfindung sind also besonders vorteilhaft, da das zumindest eine Attribut aus einem besonders vertrauenswürdigen Dokument, beispielsweise einem amtlichen Dokument, ausgelesen wird. Von besonderem Vorteil ist weiterhin, dass eine zentrale Speicherung der Attribute nicht erforderlich ist. Die Erfindung ermöglicht also ein besonders hohes Maß an Vertrauenswürdigkeit hinsichtlich der Mitteilung der zu einer digitalen Identität gehörenden Attribute, verbunden mit einem optimalen Datenschutz bei äußerst bequemer Handhabung.

Nach einer Ausführungsform der Erfindung hat das erste Computersystem zumindest ein Zertifikat, welches zur Authentifizierung des ersten Computersystems gegenüber dem ID-Token verwendet wird. Das Zertifikat beinhaltet eine Angabe derjenigen Attribute, für welche das erste Computersystem eine Leseberechtigung hat. Der ID-Token prüft anhand dieses Zertifikats, ob das erste Computersystem die erforderliche Leseberechtigung für den Lesezugriff auf das Attribut hat, bevor ein solcher Lesezugriff durch das erste Computersystem durchgeführt werden kann.

Unter einem "Zertifikat" wird hier ein digitales Zertifikat verstanden, welches auch als Public-Key-Zertifikat bezeichnet wird. Bei einem Zertifikat handelt es sich um strukturierte Daten, die dazu dienen, einen öffentlichen Schlüssel eines asymmetrischen Kryptosystems einer Identität, wie zum Beispiel einer Person oder einer Vorrichtung, zuzuordnen. Beispielsweise kann das Zertifikat dem Standard X.509 oder einem anderen Standard entsprechen.

Nach einer Ausführungsform der Erfindung sendet das erste Computersystem das zumindest eine von dem ID-Token ausgelesene Attribut unmittelbar an ein zweites Computersystem. Bei dem zweiten Computersystem kann es sich zum Beispiel um einen Server zur Erbringung eines Online-Dienstes oder eines sonstigen Dienstes, wie zum Beispiel einer Bankdienstleistung oder zur Bestellung eines Produkts handeln. Beispielsweise kann der Nutzer ein Konto online eröffnen, wozu Attribute, die die Identität des Nutzers beinhalten, von dem ersten Computersystem an das zweite Computersystem einer Bank übertragen werden.

Nach einer Ausführungsform der Erfindung erfolgt die Übertragung der aus dem ID-Token gelesenen Attribute von dem ersten Computersystem zunächst an ein drittes Computersystem des Nutzers. Beispielsweise hat das dritte Computersystem einen üblichen Internetbrowser, mit dem der Nutzer eine Webseite des zweiten Computersystems öffnen kann. Der Nutzer kann in die Webseite eine Anforderung oder Bestellung für einen Dienst oder ein Produkt eingeben.

Das zweite Computersystem spezifiziert daraufhin diejenigen Attribute, zum Beispiel des Nutzers oder seines ID-Tokens, welche es für die Erbringung des Dienstes oder die Annahme der Bestellung benötigt. Die entsprechende Attributspezifikation, die die Spezifizierung dieser Attribute beinhaltet, wird sodann von dem zweiten Computersystem an das erste Computersystem gesendet. Dies kann mit oder ohne Zwischenschaltung des dritten Computersystems erfolgen. Im letzteren Fall kann der Nutzer das gewünschte erste Computersystem gegenüber dem zweiten Computersystem spezifizieren, beispielsweise durch Eingabe der URL des ersten Computersystems in eine Webseite des zweiten Computersystems von dem dritten Computersystem aus.

Nach einer Ausführungsform der Erfindung beinhaltet die Dienst-Anforderung des Nutzers an das zweite Computersystem die Angabe eines Identifikators, wobei der Identifikator das erste Computersystem identifiziert. Beispielsweise handelt es sich bei dem Identifikator um einen Link, beispielsweise eine URL des ersten Computersystems.

Nach einer Ausführungsform der Erfindung wird die Attributspezifizierung nicht unmittelbar von dem zweiten Computersystem an das erste Computersystem gesendet, sondern zunächst von dem zweiten Computersystem an das dritte Computersystem. Das dritte Computersystem hat mehrere vordefinierte Konfigurationsdatensätze, wobei der dritte Computer mehrere vordefinierte Konfigurationsdatensätze aufweist, wobei jeder der Konfigurationsdatensätze eine Teilmenge der Attribute, zumindest eine Datenquelle und ein erstes Computersystem aus einer Menge von ersten Computersystemen spezifiziert, wobei die Attributspezifikation von dem zweiten Computersystem zunächst an das dritte Computersystem übertragen wird, sodass mittels des dritten Computersystems zumindest einer der Konfigurationsdatensätze auswählt wird, der eine Teilmenge der Attribute spezifiziert, welche das zumindest eine in der Attributspezifikation spezifizierte Attribut beinhaltet, und wobei der dritte Computer die Attributspezifikation an das erste Computersystem weiterleitet, und die Verbindung mit dem durch die Angabe der Datenquelle in dem ausgewählten Konfigurationsdatensatz spezifizierten ID-Token aufgebaut wird.

Nach einer Ausführungsform der Erfindung werden die aus dem ID-Token ausgelesenen Attribute von dem ersten Computersystem signiert und dann an das dritte Computersystem übertragen. Der Nutzer des dritten Computersystems kann die Attribute also lesen, ohne sie jedoch verändern zu können. Erst nach Freigabe durch den Nutzer werden die Attribute von dem dritten Computersystem an das zweite Computersystem weitergeleitet.

Nach einer Ausführungsform der Erfindung kann der Nutzer die Attribute vor deren Weiterleitung durch weitere Daten ergänzen.

Nach einer Ausführungsform der Erfindung hat das erste Computersystem mehrere Zertifikate mit verschiedenen Leserechten. Aufgrund des Empfangs der Attributspezifikation wählt das erste Computersystem eines oder mehrere dieser Zertifikate aus, um die entsprechenden Attribute aus dem ID-Token oder mehreren verschiedenen ID-Token auszulesen.

Nach einer Ausführungsform der Erfindung hat das dritte Computersystem zumindest einen Konfigurationsdatensatz, welcher eine externe Datenquelle zur Abfrage eines weiteren Attributs von dem dritten Computersystem über das Netzwerk spezifiziert.

Nach einer Ausführungsform der Erfindung erfolgt die Abfrage des weiteren Attributs, nachdem das zumindest eine Attribut aus dem ID-Token ausgelesen worden ist, und nachdem das dritte Computersystem das zumindest eine Attribut von dem ersten Computersystem empfangen hat, wobei die Abfrage das zumindest eine Attribut beinhaltet.

Ausführungsformen der Erfindung sind besonders vorteilhaft, da aufgrund der Zeitangabe das zumindest eine von dem ersten Computersystem aus dem ID-Token ausgelesene Attribut eine zeitlich begrenzte Gültigkeit aufweisen kann. Beispielsweise wird das zumindest eine Attribute durch das erste Computersystem mit einem Zeitstempel versehen, der den Zeitpunkt des Auslesens des Attributs aus dem ID-Token oder den Sendezeitpunkt des Attributs von dem ersten Computersystem angibt.

Beispielsweise wird durch das erste Computersystem eine Nachricht erzeugt, die das zumindest eine Attribut und dessen Zeitstempel beinhaltet. Diese Nachricht sendet das erste Computersystem als Antwort auf die von dem zweiten Computersystem empfangene Attributspezifizierung. Die Nachricht kann beispielsweise als ein so genannter Soft-Token ausgebildet sein. Diese Nachricht hat eine maximale Gültigkeitsdauer von dem durch den Zeitstempel angegebenen Zeitpunkt an.

Beispielsweise kann die Gültigkeitsdauer einige Sekunden oder Minuten betragen, vorzugsweise nicht wesentlich länger als die typischerweise für die Übertragung der Nachricht von dem ersten Computersystem an das zweite Computersystem erforderliche Zeitspanne. Hierdurch kann vermieden werden, dass mit der Nachricht Missbrauch getrieben wird, beispielsweise in dem mittels eines so genannten Brute-Force-Angriffs versucht wird, die Nachricht zu manipulieren. Ein solcher Brute-Force-Angriff würde nämlich einen längeren Zeitraum in Anspruch nehmen, wobei nach Ablauf dieses Zeitraums die Nachricht aber bereits ungültig ist.

Nach einer weiteren Ausführungsform ist die Zeitangabe die maximale Gültigkeit der Nachricht, das heißt beispielsweise des Soft-Tokens, die von dem ersten Computersystem generiert wird. Dies hat den Vorteil, dass die vertrauenswürdige Instanz, das heißt das erste Computersystem, selbst festlegen kann, für welchen maximalen Zeitraum die Nachricht als gültig zu betrachten ist.

Nach einer Ausführungsform der Erfindung generiert das zweite Computersystem aufgrund der von dem dritten Computersystem empfangenen Anforderung eine Transaktionskennung, insbesondere eine so genannte Transaktionsnummer (TAN). Diese Transaktionskennung wird zusammen mit der Attributspezifizierung von dem zweiten Computersystem an das erste Computersystem gesendet. Die von dem ersten Computersystem generierte Nachricht beinhaltet bei dieser Ausführungsform neben dem zumindest einem signierten Attribut und der Zeitangabe auch diese Transaktionskennung, die vorzugsweise ebenfalls signiert ist.

Wenn das zweite Computersystem die Nachricht von dem ersten Computersystem empfängt, so kann es anhand der Transaktionskennung der Nachricht diese Nachricht der von dem dritten Computersystem empfangenen Anforderung zuordnen und damit auch das zumindest eine mit dieser Nachricht empfangene Attribut zu dem dritten Computersystem bzw. dessen ID-Token.

Unter einer "Transaktionskennung" wird hier jede Kennung verstanden, die eine Zuordnung der von dem zweiten Computersystem an das erste Computersystem gesendeten Attributspezifizierung zu der hierauf von dem zweiten Computersystem empfangenen Nachricht ermöglicht. Bei der Transaktionskennung kann es sich um einen Identifikator, insbesondere einen sog. unique identifier oder einen globally unique identifier (GUID) handeln.

In einem weiteren Aspekt betrifft die Erfindung ein Computerprogrammprodukt, insbesondere ein digitales Speichermedium, mit ausführbaren Programminstruktionen zur Durchführung eines erfindungsgemäßen Verfahrens.

Nach Ausführungsformen der Erfindung kommt ein ID-Token zum Einsatz mit einem geschützten Speicherbereich zur Speicherung von zumindest einem Attribut, mit Mitteln zur Authentifizierung eines dem ID-Token zugeordneten Nutzers gegenüber dem ID-Token, Mitteln zur Authentifizierung eines ersten Computersystems gegenüber dem ID-Token, Mitteln zum Aufbau einer geschützten Verbindung zu dem ersten Computersystem, über die das erste Computersystem das zumindest eine Attribut auslesen kann, wobei eine notwendige Voraussetzung für das Auslesen des zumindest einen Attributs aus dem ID-Token durch das erste Computersystem die erfolgreiche Authentifizierung des Nutzers und des ersten Computersystems gegenüber dem ID-Token ist.

Zusätzlich zu der Authentifizierung des ersten Computersystems gegenüber dem ID-Token, wie sie an sich zum Beispiel als so genannte Extended Access Control für maschinenlesbare Reisedokumente (machine-readable travel documents - MRTD) bekannt und von der internationalen Luftfahrtbehörde ICAO spezifiziert ist, muss sich also der Nutzer gegenüber dem ID-Token authentifizieren. Beispielsweise wird durch eine erfolgreiche Authentifizierung des Nutzers gegenüber dem ID-Token dieser freigeschaltet, sodass die weiteren Schritte, nämlich die Authentifizierung des ersten Computersystems gegenüber dem ID-Token und/oder der Aufbau einer geschützten Verbindung zum Auslesen der Attribute, ablaufen können.

Nach einer Ausführungsform der Erfindung hat der ID-Token Mittel für eine Ende-zu-Ende-Verschlüsselung. Dies ermöglicht es, die Verbindung zwischen dem ID-Token und dem ersten Computersystem über ein drittes Computersystem des Nutzers aufzubauen, da der Nutzer aufgrund der Ende-zu-Ende-Verschlüsselung keine Änderungen der über die Verbindung übertragenen Daten vornehmen kann.

In einem weiteren Aspekt betrifft die Erfindung ein erstes Computersystem mit Mitteln zum Empfang einer Attributspezifikation über ein Netzwerk, wobei die Attributspezifikation zumindest ein Attribut spezifiziert, Mitteln zur Authentifizierung gegenüber einem ID-Token, Mitteln zum Lesen zumindest einen Attributs aus dem ID-Token über eine gesicherte Verbindung, und Mitteln zur Erzeugung einer Zeitangabe für das zumindest eine Attribut, wobei das Lesen des zumindest einen Attributs voraussetzt, dass sich ein dem ID-Token zugeordneter Nutzer gegenüber dem ID-Token authentifiziert hat.

Nach einer Ausführungsform der Erfindung kann das erste Computersystem Mittel zur Generierung einer Aufforderung an den Benutzer beinhalten. Nachdem das erste Computersystem die Attributspezifikation beispielsweise von dem zweiten Computersystem empfangen hat, sendet es daraufhin eine Aufforderung an das dritte Computersystem des Nutzers, sodass der Nutzer dazu aufgefordert wird, sich gegenüber dem ID-Token zu authentifizieren. Nachdem die Authentifizierung des Nutzers gegenüber dem ID-Token erfolgreich durchgeführt worden ist, erhält das erste Computersystem von dem dritten Computersystem eine Bestätigung. Daraufhin authentifiziert sich das erste Computersystem gegenüber dem ID-Token und es wird eine sichere Verbindung zwischen dem ID-Token und dem ersten Computersystem mit einer Ende-zu-Ende-Verschlüsselung aufgebaut.

Nach einer Ausführungsform der Erfindung hat das erste Computersystem mehrere Zertifikate, die jeweils unterschiedliche Leserechte spezifizieren. Nach Empfang der Attributspezifikation wählt das erste Computersystem zumindest eines dieser Zertifikate mit den zum Lesen der spezifizierten Attribute ausreichenden Leserechten.

Ausführungsformen des erfindungsgemäßen ersten Computersystems sind besonders vorteilhaft, da sie in Kombination mit der Notwendigkeit der Authentifizierung des Nutzers gegenüber dem ID-Token einen Vertrauensanker für die unverfälschte digitale Identität des Nutzers bilden. Hierbei ist von besonderem Vorteil, dass dies keine vorherige Registrierung des Nutzers gegenüber dem Computersystem erfordert sowie auch keine zentrale Speicherung der die digitalen Identitäten bildenden Attribute der Nutzer.

Nach einer Ausführungsform der Erfindung empfängt das erste Computersystem zusammen mit der Attributspezifikation einen Identifikator des zweiten Computersystems. Mit Hilfe des Identifikators identifiziert das Computersystem das zweite Computersystem, welches die Identifikationsdienste in Anspruch nehmen möchte, um diese Dienstleistung gegenüber dem zweiten Computersystem zu vergebühren.

Nach einer Ausführungsform der Erfindung handelt es sich bei dem Computersystem um ein behördlich zertifiziertes Trust-Center, insbesondere ein Signaturgesetzkonformes Trust-Center.

Im Weiteren werden Ausführungsformen der Erfindung mit Bezugnahme auf die Zeichnungen näher erläutert. Es zeigen:
- Figur 1: ein Blockdiagramm einer Ausführungsform erfindungsgemäßer Computersysteme,
- Figur 2: ein Flussdiagramm einer Ausführungsform eines erfindungsgemäßen Verfahrens,
- Figur 3: ein Blockdiagramm weiterer Ausführungsformen erfindungsgemäßer Computersysteme,
- Figur 4: ein Flussdiagramm einer weiteren Ausführungsform eines erfindungsgemäßen Verfahrens.

Elemente der nachfolgenden Ausführungsformen, die einander entsprechen, werden mit denselben Bezugszeichen gekennzeichnet.

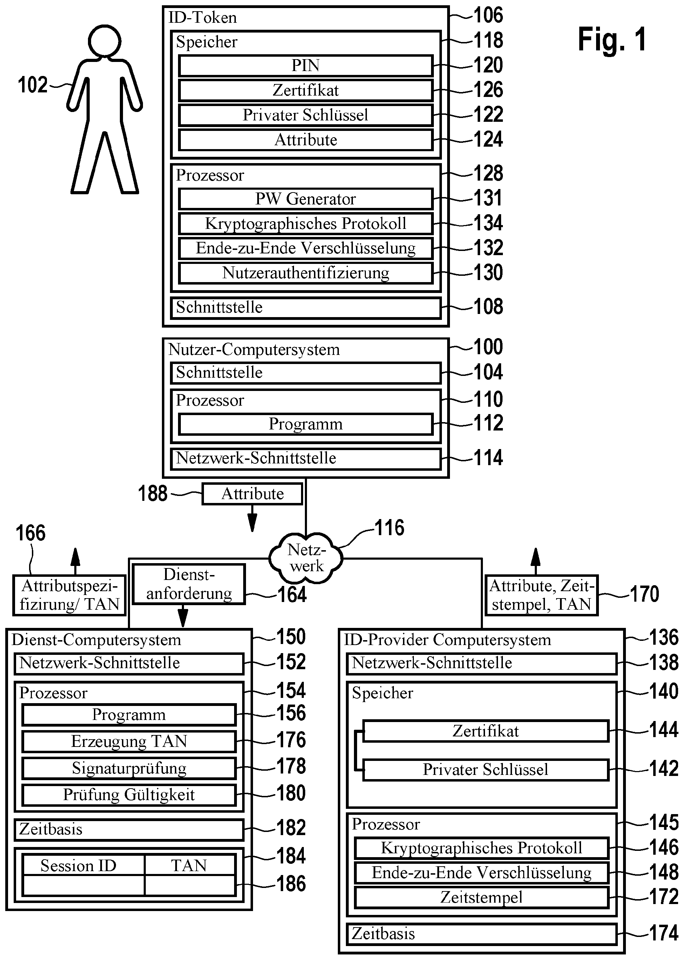

Die Figur 1 zeigt ein Nutzer-Computersystem 100 eines Nutzers 102. Bei dem Nutzer-Computersystem 100 kann es sich um einen Personalcomputer, einen tragbaren Computer, wie zum Beispiel einen Laptop oder Palmtop-Computer, einen Personal Digital Assistant, ein mobiles Telekommunikationsgerät, insbesondere ein Smart Phone, oder dergleichen handeln. Das Nutzer-Computersystem 100 hat eine Schnittstelle 104 zur Kommunikation mit einem ID-Token 106, der eine entsprechende Schnittstelle 108 aufweist.

Das Nutzer-Computersystem 100 hat zumindest einen Prozessor 110 zur Ausführung von Programminstruktionen 112 sowie eine Netzwerk-Schnittstelle 114 zur Kommunikation über ein Netzwerk 116. Bei dem Netzwerk kann es sich um ein Computernetzwerk, wie zum Beispiel das Internet, handeln.

Der ID-Token 106 hat einen elektronischen Speicher 118 mit geschützten Speicherbereichen 120, 122 und 124. Der geschützte Speicherbereich 120 dient zur Speicherung eines Referenzwerts, der für die Authentifizierung des Nutzers 102 gegenüber dem ID-Token 106 benötigt wird. Bei diesem Referenzwert handelt es sich beispielsweise um eine Kennung, insbesondere eine so genannte Personal Identification Number (PIN), oder um Referenzdaten für ein biometrisches Merkmal des Nutzers 102, welches für die Authentifizierung des Nutzers gegenüber dem ID-Token 106 verwendet werden kann.

Der geschützte Bereich 122 dient zur Speicherung eines privaten Schlüssels und der geschützte Speicherbereich 124 dient zur Speicherung von Attributen, zum Beispiel des Nutzers 102, wie zum Beispiel dessen Name, Wohnort, Geburtsdatum, Geschlecht, und/oder von Attributen, die den ID-Token selbst betreffen, wie zum Beispiel die Institution, die den ID-Token erstellt oder ausgegeben hat, die Gültigkeitsdauer des ID-Tokens, einen Identifikator des ID-Tokens, wie zum Beispiel eine Passnummer oder eine Kreditkartennummer.

Der elektronische Speicher 118 kann ferner einen Speicherbereich 126 zur Speicherung eines Zertifikats aufweisen. Das Zertifikat beinhaltet einen öffentlichen Schlüssel, der dem in dem geschützten Speicherbereich 122 gespeicherten privaten Schlüssel zugeordnet ist. Das Zertifikat kann nach einem Public Key Infrastruktur (PKI) Standard erstellt worden sein, beispielsweise nach dem X.509 Standard.

Das Zertifikat muss nicht zwangsläufig in dem elektronischen Speicher 118 des ID-Tokens 106 gespeichert sein. Alternativ oder zusätzlich kann das Zertifikat auch in einem öffentlichen Verzeichnisserver gespeichert sein.

Der ID-Token 106 hat einen Prozessor 128. Der Prozessor 128 dient zur Ausführung von Programminstruktionen 130, 132 und 134. Die Programminstruktionen 130 dienen zur Nutzerauthentifizierung, d.h. zur Authentifizierung des Nutzers 102 gegenüber dem ID-Token.

Bei einer Ausführungsform mit PIN gibt der Nutzer 102 seine PIN zu seiner Authentifizierung in den ID-Token 106 ein, beispielsweise über das Nutzer-Computersystem 100. Durch Ausführung der Programminstruktionen 130 wird dann auf den geschützten Speicherbereich 120 zugegriffen, um die eingegebene PIN mit dem dort gespeicherten Referenzwert der PIN zu vergleichen. Für den Fall, dass die eingegebene PIN mit dem Referenzwert der PIN übereinstimmt, gilt der Nutzer 102 als authentifiziert.

Alternativ wird ein biometrisches Merkmal des Nutzers 102 erfasst. Beispielsweise hat der ID-Token 106 hierzu einen Fingerabdrucksensor oder ein Fingerabdrucksensor ist an das Nutzer-Computersystem 100 angeschlossen.

Die von dem Nutzer 102 erfassten biometrischen Daten werden durch Ausführung der Programminstruktionen 130 bei dieser Ausführungsform mit den in dem geschützten Speicherbereich 120 gespeicherten biometrischen Referenzdaten verglichen. Bei hinreichender Übereinstimmung der von dem Nutzer 102 erfassten biometrischen Daten mit den biometrischen Referenzdaten gilt der Nutzer 102 als authentifiziert.

Die Programminstruktionen 134 dienen zur Ausführung der den ID-Token 106 betreffenden Schritte eines kryptographischen Protokolls zur Authentifizierung eines ID-Provider-Computersystems 136 gegenüber dem ID-Token 106. Bei dem kryptographischen Protokoll kann es sich um ein Challenge-Response-Protokoll basierend auf einem symmetrischen Schlüssel oder einem asymmetrischen Schlüsselpaar handeln.

Beispielsweise wird durch das kryptographische Protokoll ein Extended Access Control-Verfahren implementiert, wie es für maschinenlesbare Reisedokumente (machine-readable travel documents - MRTD) von der internationalen Luftfahrtbehörde (ICAO) spezifiziert ist. Durch erfolgreiche Ausführung des kryptographischen Protokolls authentifiziert sich das ID-Provider-Computersystem 136 gegenüber dem ID-Token und weist dadurch seine Leseberechtigung zum Lesen der in dem geschützten Speicherbereich 124 gespeicherten Attribute nach. Die Authentifizierung kann auch gegenseitig sein, d.h. auch der ID-Token 106 muss sich dann gegenüber dem ID-Provider-Computersystem 136 nach demselben oder einem anderen kryptographischen Protokoll authentifizieren.

Die Programminstruktionen 132 dienen zur Ende-zu-Ende-Verschlüsselung von zwischen dem ID-Token 106 und dem ID-Provider-Computersystem 136 übertragenen Daten, zumindest aber der von dem ID-Provider-Computersystem 136 aus dem geschützten Speicherbereich 124 ausgelesenen Attribute. Für die Ende-zu-Ende-Verschlüsselung kann ein symmetrischer Schlüssel verwendet werden, der beispielsweise anlässlich der Ausführung des kryptographischen Protokolls zwischen dem ID-Token 106 und dem ID-Provider-Computersystem 136 vereinbart wird.

Alternativ zu der in der Figur 1 dargestellten Ausführungsform kann das Nutzer-Computersystem 100 mit seiner Schnittstelle 104 nicht unmittelbar mit der Schnittstelle 108 kommunizieren, sondern über ein an die Schnittstelle 104 angeschlossenes Lesegerät für den ID-Token 106. Über dieses Lesegerät, wie zum Beispiel einen so genannten Klasse 2-Chipkarten-Terminal, kann auch die Eingabe der PIN erfolgen.

Das ID-Provider-Computersystem 136 hat eine Netzwerk-Schnittstelle 138 zur Kommunikation über das Netzwerk 116. Das ID-Provider-Computersystem 136 hat ferner einen Speicher 140, in dem ein privater Schlüssel 142 des ID-Provider-Computersystems 136 sowie das entsprechende Zertifikat 144 gespeichert ist. Auch bei diesem Zertifikat kann es sich beispielsweise um ein Zertifikat nach einem PKI-Standard, wie zum Beispiel X.509 handeln.

Das ID-Provider-Computersystem 136 hat ferner zumindest einen Prozessor 145 zur Ausführung von Programminstruktionen 146 und 148. Durch Ausführung der Programminstruktionen 146 werden die das ID-Provider-Computersystem 136 betreffende Schritte des kryptographischen Protokolls ausgeführt. Insgesamt wird also das kryptographische Protokoll durch Ausführung der Programminstruktionen 134 durch den Prozessor 128 des ID-Tokens 106 sowie durch Ausführung der Programminstruktionen 146 durch den Prozessor 145 des ID-Provider-Computersystems 136 implementiert.

Die Programminstruktionen 148 dienen zur Implementierung der Ende-zu-Ende-Verschlüsselung auf Seiten des ID-Provider-Computersystems 136, beispielsweise basierend auf dem symmetrischen Schlüssel, der anlässlich der Ausführung des kryptographischen Protokolls zwischen dem ID-Token 106 und dem ID-Provider-Computersystem 136 vereinbart worden ist. Prinzipiell kann jedes an sich vor bekannte Verfahren zur Vereinbarung des symmetrischen Schlüssels für die Ende-zu-Ende-Verschlüsselung verwendet werden, wie zum Beispiel ein Diffie-Hellman-Schlüsselaustausch.

Das ID-Provider-Computersystem 136 befindet sich vorzugsweise in einer besonders geschützten Umgebung, insbesondere in einem so genannten Trust-Center, sodass das ID-Provider-Computersystem 136 in Kombination mit der Notwendigkeit der Authentifizierung des Nutzers 102 gegenüber dem ID-Token 106 den Vertrauensanker für die Authentizität der aus dem ID-Token 106 ausgelesenen Attribute bildet.

Das ID-Provider-Computersystem 136 hat ferner eine Zeitbasis 174, die beispielsweise die aktuelle Uhrzeit angibt. Bei der Zeitbasis 174 kann es sich um die so genannte system clock handeln. Die Zeitbasis 174 liefert fortlaufend aktuelle Zeitangaben, beispielsweise als Unix-Zeit.

Der Prozessor 145 dient zur Ausführung von Programminstruktionen 172, die mit Hilfe der Zeitbasis 174 einen Zeitstempel für das zumindest eine durch das ID-Provider-Computersystem 136 aus dem ID-Token 106 ausgelesene Attribut erzeugen. Beispielsweise sind die Programminstruktionen 172 so ausgebildet, dass das aus dem ID-Token 106 ausgelesene Attribut zu dem Zeitpunkt des Empfangs durch das ID-Provider-Computersystem 136 mit einem Zeitstempel versehen wird, der also den Empfangszeitpunkt angibt.

Alternativ oder zusätzlich wird ein von dem ID-Provider-Computersystem 136 von dem ID-Token 106 empfangenes Attribut mit einem Zeitstempel versehen, der die Sendezeit einer dieses Attribut beinhaltenden Nachricht, beispielsweise in Form eines Soft-Tokens, von dem ID-Provider-Computersystem 136 angibt.

Ferner ist es auch möglich, dass die Programminstruktionen 172 so ausgebildet sind, dass einem aus dem ID-Token 106 ausgelesen Attribut ein Zeitstempel mit einer Zeitangabe zugeordnet wird, welche in der Zukunft liegt. Diese Zeitangabe gibt die maximale Gültigkeit einer von dem ID-Provider-Computersystem 136 generierten, das Attribut beinhaltenden Nachricht an, beispielsweise eines von dem ID-Provider-Computersystem 136 generierten Soft-Tokens. In diesem Fall kann der Zeitstempel des Attributs einen Zeitpunkt angeben, der einige Sekunden oder Minuten hinter dem Empfangszeitpunkt des Attributs durch das ID-Provider-Computersystem 136, dem Zeitpunkt der Generierung der Nachricht oder dem Sendezeitpunkt der Nachricht liegt.

Ein Dienst-Computersystem 150 kann zur Entgegennahme einer Bestellung oder eines Auftrags für eine Dienstleistung oder ein Produkt, insbesondere eine Online-Dienstleistung, ausgebildet sein. Beispielsweise kann der Nutzer 102 online über das Netzwerk 116 ein Konto bei einer Bank eröffnen oder eine andere Finanz- oder Bankdienstleistung in Anspruch nehmen. Das Dienst-Computersystem 150 kann auch als Online-Warenhaus ausgebildet sein, sodass der Benutzer 102 beispielsweise online ein Mobiltelefon oder dergleichen erwerben kann. Ferner kann das Dienst-Computersystem 150 auch zur Lieferung von digitalen Inhalten ausgebildet sein, beispielsweise für den Download von Musik- und/oder Videodaten.

Das Dienst-Computersystem 150 hat hierzu eine Netzwerk-Schnittstelle 152 zur Verbindung mit dem Netzwerk 116. Ferner hat das Dienst-Computersystem 150 zumindest einen Prozessor 154 zur Ausführung von Programminstruktionen 156. Durch Ausführung der Programminstruktionen 156 werden beispielsweise dynamische HTML-Seiten generiert, über die der Nutzer 102 seinen Auftrag oder seine Bestellung eingeben kann.

Je nach der Art des beauftragten oder bestellten Produkts oder der Dienstleistung muss das Dienst-Computersystem 150 ein oder mehrere Attribute des Nutzers 102 und/oder dessen ID-Token 106 anhand eines oder mehrerer vorgegebener Kriterien überprüfen. Nur wenn diese Prüfung bestanden wird, wird die Bestellung oder der Auftrag des Nutzers 102 entgegengenommen und/oder ausgeführt.

Beispielsweise ist es für die Eröffnung eines Bankkontos oder den Kauf eines Mobiltelefons mit einem dazugehörigen Vertrag erforderlich, dass der Nutzer 102 seine Identität gegenüber dem Dienst-Computersystem 150 offenbart, und dass diese Identität überprüft wird. Im Stand der Technik muss der Nutzer 102 hierzu beispielsweise seinen Personalausweis vorlegen. Dieser Vorgang wird durch das Auslesen der digitalen Identität des Nutzers 102 aus seinem ID-Token 106 ersetzt.

Je nach Anwendungsfall muss der Nutzer 102 aber nicht seine Identität gegenüber dem Dienst-Computersystem 150 offenbaren, sondern es reicht die Mitteilung, zum Beispiel nur eines der Attribute aus. Beispielsweise kann der Nutzer 102 über eines der Attribute einen Nachweis erbringen, dass er zu einer bestimmten Personengruppe gehört, die zugangsberechtigt für auf dem Dienst-Computersystem 150 zum Download bereitgehaltener Daten ist. Beispielsweise kann ein solches Kriterium ein Mindestalter des Nutzers 102 sein oder die Zugehörigkeit des Nutzers 102 zu einem Personenkreis, der auf bestimmte vertrauliche Daten eine Zugriffsberechtigung hat.

Der Prozessor 154 dient ferner zur Ausführung von Programminstruktionen 176, 178 und 180. Durch Ausführung der Programminstruktionen 176 wird eine Transaktionsnummer (TAN) für die von dem Nutzer 102 gewünschte Transaktion, das heißt seinen Auftrag oder seine Bestellung, vergeben.

Durch Ausführung der Programminstruktionen 178 kann die Validität einer Signatur einer von dem ID-Provider-Computersystem 136 empfangenen Nachricht seitens des Dienst-Computersystems 150 geprüft werden. Durch Ausführung der Programminstruktionen 180 kann ferner die zeitliche Gültigkeit einer solchen Antwort geprüft werden, das heißt ob die Gültigkeitsdauer der Nachricht bereits abgelaufen ist. Hierzu kann durch Ausführung der Programminstruktionen auf eine Zeitbasis 182 des Dienst-Computersystems 150 zugegriffen werden, die mit der Zeitbasis 174 des ID-Provider-Computersystem 136 synchron ist.

Das Dienst-Computersystem 150 hat ferner einen Speicher 184 zur Speicherung einer Zuordnung von Session-IDs und TANs, beispielsweise in Form einer Tabelle 186.

Zur Inanspruchnahme eines von dem Dienst-Computersystem 150 zur Verfügung gestellten Dienstes durch den Nutzer 102 wird beispielsweise wie folgt vorgegangen:
1. Der Nutzer 102 startet ein Browserprogramm seines Nutzer-Computersystems 100 und gibt die URL einer Website des Dienst-Computersystems 150 ein. Daraufhin wird eine Internetverbindung zwischen dem Nutzer-Computersystem 100 und dem Dienst-Computersystem 150 aufgebaut, der eine so genannte Session-ID zugeordnet ist. Die betreffende Website wird von dem Dienst-Computersystem 150 an das Nutzer-Computersystem 100 übertragen und dort mit Hilfe des Webbrowsers angezeigt. Der Nutzer 102 kann dann einen bestimmten Dienst auf dieser Website auswählen und die Eingabetaste betätigen. Daraufhin wird von dem Nutzer-Computersystem 100 eine Dienstanforderung 164 generiert und an das Dienst-Computersystem 150 übertragen. Durch Ausführung der Programminstruktionen 176 wird dieser Dienstanforderung 164 ein TAN zugeordnet. Die zu dieser Dienstanforderung 164 gehörende Session-ID wird zusammen mit dieser TAN in der Tabelle 186 abgespeichert.
   Durch Ausführung der Programminstruktionen 156 wird dann eine Attributspezifizierung 166 generiert, die eine Spezifikation derjenige Attribute des Nutzers 102 beinhaltet, die das Dienst-Computersystem 150 für die Erbringung des mit der Dienstanforderung 164 angeforderten Dienste benötigt. Ferner beinhaltet die Attributspezifizierung 166 auch die der Dienstanforderung 164 bzw. deren Session-ID zugeordnete TAN.
   Die Attributspezifizierung 166 mit der TAN wird von dem Dienst-Computersystem 150 entweder mittelbar über das Nutzer-Computersystem 100 oder unmittelbar über das Netzwerk 116 an das ID-Provider-Computersystem 136 übertragen.
2. Authentifizierung des Nutzers 102 gegenüber dem ID-Token 106.
   Der Nutzer 102 authentifiziert sich gegenüber dem ID-Token 106. Bei einer Implementierung mit PIN gibt der Nutzer 102 hierzu seine PIN beispielsweise über das Nutzer-Computersystem 100 oder einen daran angeschlossenen Chipkarten-Terminal ein. Durch Ausführung der Programminstruktionen 130 prüft dann der ID-Token 106 die Korrektheit der eingegebenen PIN. Wenn die eingegebene PIN mit dem in dem geschützten Speicherbereich 120 gespeicherten Referenzwert der PIN übereinstimmt, so gilt der Nutzer 102 als authentifiziert. Analog kann vorgegangen werden, wenn ein biometrisches Merkmal des Nutzers 102 zu dessen Authentifizierung verwendet wird, wie oben beschrieben.
3. Authentifizierung des ID-Provider-Computersystems 136 gegenüber dem ID-Token 106.
   Hierzu wird eine Verbindung zwischen dem ID-Token 106 und dem ID-Provider-Computersystem 136 über das Nutzer-Computersystem 100 und das Netzwerk 116 hergestellt. Beispielsweise überträgt das ID-Provider-Computersystem 136 sein Zertifikat 144 über diese Verbindung an den ID-Token 106. Durch die Programminstruktionen 134 wird dann eine so genannte Challenge generiert, d.h. beispielsweise eine Zufallszahl. Diese Zufallszahl wird mit dem in dem Zertifikat 144 beinhalteten öffentlichen Schlüssel des ID-Provider-Computersystems 136 verschlüsselt. Das resultierende Chiffrat wird von dem ID-Token 106 über die Verbindung an das ID-Provider-Computersystem 136 gesendet. Das ID-Provider-Computersystem 136 entschlüsselt das Chiffrat mit Hilfe seines privaten Schlüssels 142 und erhält so die Zufallszahl. Die Zufallszahl sendet das ID-Provider-Computersystem 136 über die Verbindung an den ID-Token 106 zurück. Durch Ausführung der Programminstruktionen 134 wird dort geprüft, ob die von dem ID-Provider-Computersystem 136 empfangene Zufallszahl mit der ursprünglich generierten Zufallszahl, d.h. der Challenge, übereinstimmt. Ist dies der Fall, so gilt das ID-Provider-Computersystem 136 als gegenüber dem ID-Token 106 authentifiziert. Die Zufallszahl kann als symmetrischer Schlüssel für die Ende-zu-Ende Verschlüsselung verwendet werden.
4. Nachdem sich der Nutzer 102 erfolgreich gegenüber dem ID-Token 106 authentifiziert hat, und nachdem sich das ID-Provider-Computersystem 136 erfolgreich gegenüber dem ID-Token 106 authentifiziert hat, erhält das ID-Provider-Computersystem 136 eine Leseberechtigung zum Auslesen, eines, mehrerer oder aller der in dem geschützten Speicherbereich 124 gespeicherten Attribute. Aufgrund eines entsprechenden Lesekommandos, welches das ID-Provider-Computersystem 136 über die Verbindung an den ID-Token 106 sendet, werden die angeforderten Attribute aus dem geschützten Speicherbereich 124 ausgelesen und durch Ausführung der Programminstruktionen 132 verschlüsselt. Die verschlüsselten Attribute 188 werden über die Verbindung an das ID-Provider-Computersystem 136 übertragen und dort durch Ausführung der Programminstruktionen 148 entschlüsselt. Dadurch erhält das ID-Provider-Computersystem 136 Kenntnis der aus dem ID-Token 106 ausgelesenen Attribute.
5. Diese Attribute werden von dem ID-Provider-Computersystem 136 mit Hilfe seines Zertifikats 144 und seines privaten Schlüssels 142 signiert. Ferner wird durch Ausführung der Programminstruktionen 172 mit Hilfe der Zeitbasis 174 ein Zeitstempel für diese Attribute erzeugt. Der Zeitstempel und die TAN, die mit der Attributspezifizierung 166 empfangen worden sind, werden ebenfalls von dem ID-Provider-Computersystem 136 signiert. Beispielsweise werden die Attribute, der Zeitstempel und die TAN jeweils separat signiert. Alternativ wird zunächst die Antwort 170 generiert, die die Attribute, den Zeitstempel und die TAN beinhaltet. Die Antwort 170 wird dann insgesamt signiert.
   Die Antwort 170 wird von dem ID-Provider-Computersystem 136 über das Nutzer-Computersystem 100 oder direkt an das Dienst-Computersystem 150 übertragen. Das Dienst-Computersystem 150 prüft daraufhin die Validität der Signaturen oder der Signatur der Antwort 170.
   Ferner prüft das Dienst-Computersystem 150 durch Ausführung der Programminstruktionen 180, ob die Antwort 170 noch gültig ist. Hierzu wird geprüft, ob eine durch den Zeitstempel gegebene maximale Gültigkeitsdauer noch nicht überschritten ist. Durch Ausführung der Programminstruktionen 156 wird ferner auf die Tabelle 186 zugegriffen, um mit Hilfe der in der Antwort 170 beinhaltenden TAN die entsprechende Session-ID zu identifizieren.
   Das Dienst-Computersystem 150 kann auf dieser Art und Weise die mit der Antwort 170 empfangenen Attribute der betreffenden Session-ID zuordnen. Wenn die Signaturen bzw. die Signatur valide ist und wenn die Gültigkeitsdauer der Antwort 170 noch nicht überschritten ist, so kann das Dienst-Computersystem 150 anschließend den mit der Dienstanforderung 164 geforderten Dienst gegenüber dem Nutzer 102 erbringen, sofern dies mit der Antwort 170 empfangenen Attribute des Nutzers 102 zulassen.
   Die von dem ID-Provider-Computersystem 136 generierte Nachricht, das heißt die Antwort 170, kann beispielsweise als ein so genannter Soft-Token ausgebildet sein.

Durch die Notwendigkeit der Authentifizierung des Nutzers 102 gegenüber dem ID-Token 106 und der Authentifizierung des ID-Provider-Computersystems 136 gegenüber dem ID-Token 106 ist der notwendige Vertrauensanker geschaffen, sodass das Dienst-Computersystem 150 sicher sein kann, dass die ihm von dem ID-Provider-Computersystem 136 mitgeteilten Attribute des Nutzers 102 zutreffend und nicht verfälscht sind.

Je nach Ausführungsform kann die Reihenfolge der Authentifizierung unterschiedlich sein. Beispielsweise kann vorgesehen sein, dass sich zunächst der Nutzer 102 gegenüber dem ID-Token 106 authentifizieren muss und nachfolgend das ID-Provider-Computersystem 136. Es ist aber grundsätzlich auch möglich, dass sich zunächst das ID-Provider-Computersystem 136 gegenüber dem ID-Token 106 authentifizieren muss und erst nachfolgend der Nutzer 102.

In dem ersten Fall ist der ID-Token 106 beispielsweise so ausgebildet, dass er nur durch Eingabe einer korrekten PIN oder eines korrekten biometrischen Merkmals durch den Nutzer 102 freigeschaltet wird. Erst diese Freischaltung ermöglicht den Start der Programminstruktionen 132 und 134 und damit die Authentifizierung des ID-Provider-Computersystems 136.

Im zweiten Fall ist ein Start der Programminstruktionen 132 und 134 auch bereits möglich, wenn sich der Nutzer 102 noch nicht gegenüber dem ID-Token 106 authentifiziert hat. In diesem Fall sind beispielsweise die Programminstruktionen 134 so ausgebildet, dass das ID-Provider-Computersystem 136 erst dann einen Lesezugriff auf den geschützten Speicherbereich 124 zum Auslesen eines oder mehrerer der Attribute durchführen kann, nachdem von den Programminstruktionen 130 die erfolgreiche Authentifizierung auch des Nutzers 102 signalisiert worden ist.

Von besonderem Vorteil ist die Nutzbarmachung des ID-Tokens 106 für zum Beispiel E-Commerce und E-Government-Anwendungen, und zwar medienbruchfrei und rechtssicher aufgrund des durch die Notwendigkeit der Authentifizierung des Nutzers 102 und des ID-Provider-Computersystems 136 gegenüber dem ID-Token 106 gebildeten Vertrauensankers. Von besonderem Vorteil ist ferner, dass eine zentrale Speicherung der Attribute verschiedener Nutzer 102 nicht erforderlich ist, sodass die im Stand der Technik bestehenden Datenschutzprobleme hiermit gelöst sind. Was die Bequemlichkeit der Anwendung des Verfahrens betrifft, ist von besonderem Vorteil, dass eine vorherige Registrierung des Nutzers 102 zur Inanspruchnahme des ID-Provider-Computersystems 136 nicht erforderlich ist.

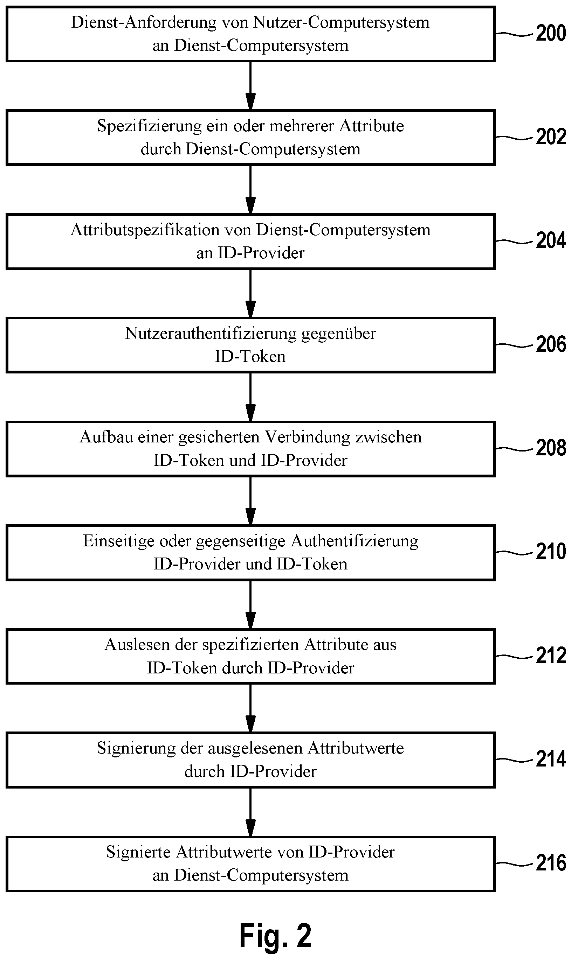

Die Figur 2 zeigt eine Ausführungsform eines erfindungsgemäßen Verfahrens. In dem Schritt 200 wird eine Dienst-Anforderung von dem Nutzer-Computersystem an das Dienst-Computersystem gesendet. Beispielsweise startet der Nutzer hierzu einen Internet-Browser des Nutzer-Computersystems und gibt eine URL zum Aufruf einer Webseite des Dienst-Computersystems ein. In die aufgerufene Webseite gibt der Nutzer dann seine Dienst-Anforderung ein, zum Beispiel zur Bestellung oder Auftragserteilung für einen Dienst oder ein Produkt.

In dem Schritt 202 spezifiziert das Dienst-Computersystem 150 daraufhin ein oder mehrere Attribute, welche es benötigt, um die Berechtigung des Nutzers für die Dienst-Anforderung zu prüfen. Insbesondere kann das Dienst-Computersystem solche Attribute spezifizieren, welche die digitale Identität des Nutzers 102 bestimmen. Diese Spezifizierung der Attribute durch das Dienst-Computersystem 150 kann fest vorgegeben sein oder je nach der Dienst-Anforderung im Einzelfall durch das Dienst-Computersystem 150 anhand vorgegebener Regeln bestimmt werden.

In dem Schritt 204 wird die Attributspezifikation, d.h. die in dem Schritt 202 erfolgte Spezifizierung der ein oder mehreren der Attribute, mit einer TAN von dem Dienst-Computersystem an das ID-Provider-Computersystem übertragen, und zwar entweder direkt oder über das Nutzer-Computersystem.

Um dem ID-Provider-Computersystem die Möglichkeit zu geben, Attribute aus seinem ID-Token auszulesen, authentifiziert sich der Nutzer in dem Schritt 206 gegenüber dem ID-Token.

In dem Schritt 208 wird eine Verbindung zwischen dem ID-Token und dem ID-Provider-Computersystem aufgebaut. Hierbei handelt es sich vorzugsweise um eine gesicherte Verbindung, beispielsweise nach einem so genannten Secure Messaging-Verfahren.

In dem Schritt 210 erfolgt zumindest eine Authentifizierung des ID-Provider-Computersystems gegenüber dem ID-Token über die in dem Schritt 208 aufgebaute Verbindung. Zusätzlich kann eine Authentifizierung auch des ID-Tokens gegenüber dem ID-Provider-Computersystem vorgesehen sein.

Nachdem sowohl der Nutzer als auch das ID-Provider-Computersystem erfolgreich gegenüber dem ID-Token authentifiziert worden sind, erhält das ID-Provider-Computersystem von dem ID-Token die Zugriffsberechtigung zum Auslesen der Attribute. In dem Schritt 212 sendet das ID-Provider-Computersystem ein oder mehrere Lesekommandos zum Auslesen der gemäß Attributspezifikation erforderlichen Attribute aus dem ID-Token. Die Attribute werden dann mittels Ende-zu-Ende-Verschlüsselung über die gesicherte Verbindung an das [D-Provider-Computersystem übertragen und dort entschlüsselt.

Die ausgelesenen Attributwerte werden in dem Schritt 214 von dem ID-Provider-Computersystem mit einem Zeitstempel versehen und zusammen mit der TAN signiert. In dem Schritt 216 sendet das ID-Provider-Computersystem die signierten Attributwerte über das Netzwerk. Die signierten Attributwerte erreichen das Dienst-Computersystem entweder direkt oder über das Nutzer-Computersystem. Im letzteren Fall kann der Nutzer die Möglichkeit haben, die signierten Attributwerte zur Kenntnis zu nehmen und/oder durch weitere Daten zu ergänzen. Es kann vorgesehen sein, dass die signierten Attributwerte gegebenenfalls mit den ergänzten Daten erst nach Freigabe durch den Nutzer von dem Nutzer-Computersystem an das Dienst-Computersystem weitergeleitet werden. Hierdurch ist größtmögliche Transparenz für den Nutzer hinsichtlich der von dem ID-Provider-Computersystem an das Dienst-Computersystem gesendeten Attribute hergestellt.

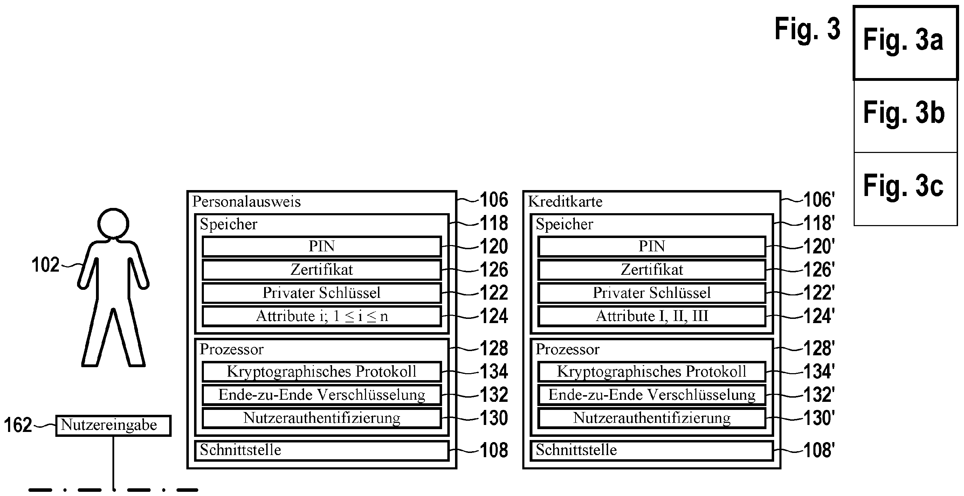

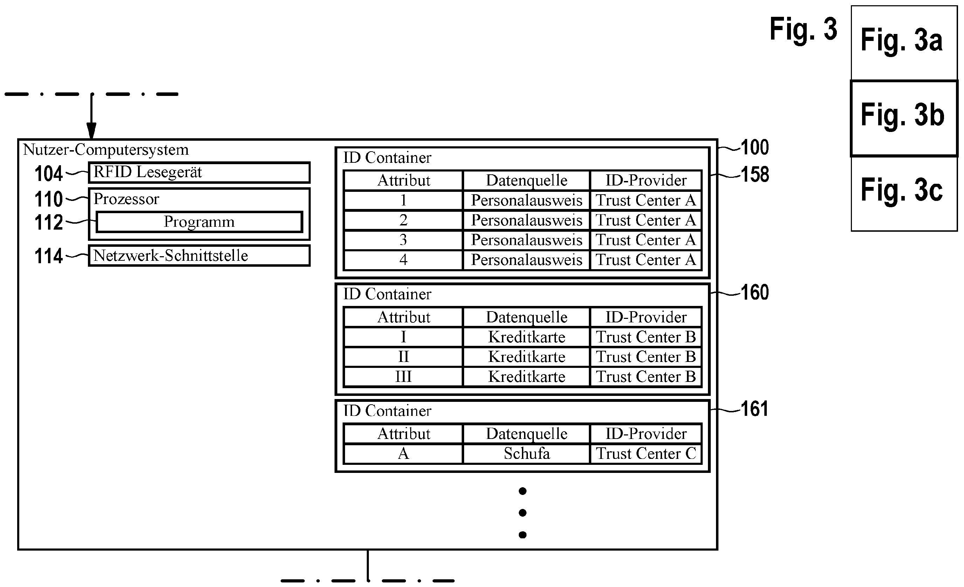

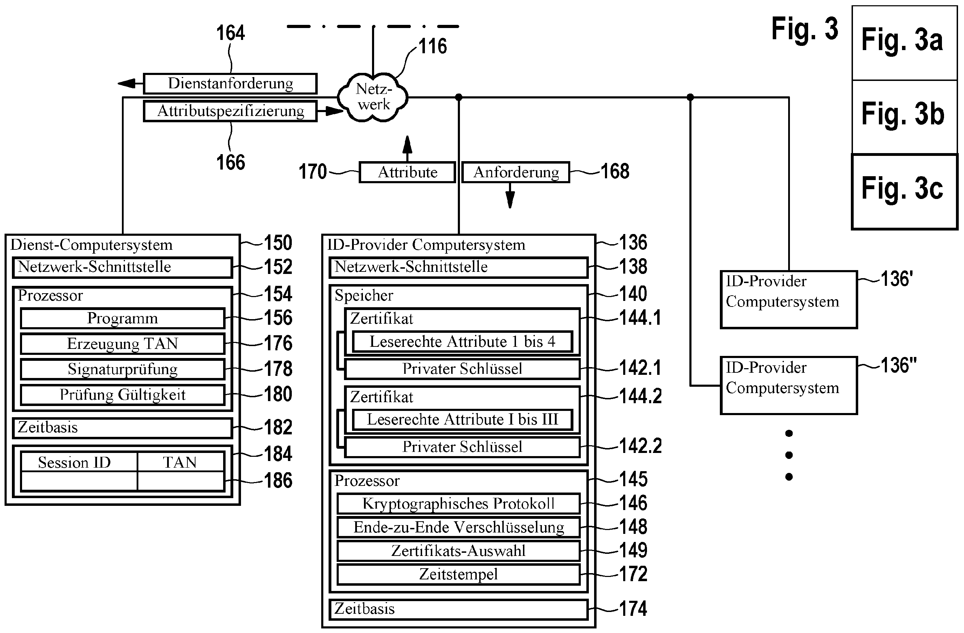

Die Figur 3 zeigt weitere Ausführungsformen eines erfindungsgemäßen ID-Tokens und erfindungsgemäße Computersysteme. Bei der Ausführungsform der Figur 3 ist der ID-Token 106 als Dokument ausgebildet, wie zum Beispiel als papier- und/oder kunststoffbasiertes Dokument mit einem integrierten elektronischen Schaltkreis, durch den die Schnittstelle 108, der Speicher 118 und der Prozessor 128 gebildet werden. Bei dem integrierten elektronischen Schaltkreis kann es sich beispielsweise um ein so genanntes Funketikett handeln, welches auch als RFID-Tag oder RFID-Label bezeichnet wird. Die Schnittstelle 108 kann aber auch kontaktbehaftet oder als so genanntes Dual Mode Interface ausgebildet sein.

Insbesondere kann es sich bei dem Dokument 106 um ein Wert- oder Sicherheitsdokument handeln, wie zum Beispiel um ein maschinenlesbares Reisedokument (MRTD), wie zum Beispiel einen elektronischen Reisepass oder einen elektronischen Personalausweis, oder um ein Zahlungsmittel, wie zum Beispiel eine Kreditkarte.

In dem geschützten Speicherbereich 124 sind bei der hier betrachteten Ausführungsform die Attribute i gespeichert, wobei 1 ≤ i ≤ n ist. Im Weiteren wird ohne Beschränktheit der Allgemeinheit davon ausgegangen, dass es sich bei dem in der Figur 3 exemplarisch gezeigten ID-Token 106 um einen elektronischen Personalausweis handelt. Beispielsweise handelt es sich bei dem Attribut i = 1 um den Namen, bei dem Attribut i = 2 um den Vornamen, bei dem Attribut i = 3 um die Adresse und bei dem Attribut i = 4 um das Geburtsdatum, etc.

Die Schnittstelle 104 des Nutzer-Computersystems 100 kann bei der hier betrachteten Ausführungsform als RFID-Lesegerät ausgebildet sein, welches einen integralen Bestandteil des Nutzer-Computersystems bilden kann oder als separate Komponente an dieses angeschlossen sein kann.

Der Nutzer 102 verfügt über einen oder mehrere weitere ID-Token, die prinzipiell gleich aufgebaut sind, wie z.B. einen ID-Token 106', bei dem es sich um eine Kreditkarte handelt.

In dem Nutzer-Computersystem 100 können mehrere Konfigurationsdatensätze 158, 160,... gespeichert sein. Jeder der Konfigurationsdatensätze gibt für eine bestimmte Attributmenge eine Datenquelle und ein ID-Provider-Computersystem an, welches die spezifizierte Datenquelle lesen kann. Bei dieser Ausführungsform kann das Nutzer-Computersystem 100 über das Netzwerk 116 verschiedene ID-Provider-Computersysteme 136, 136', ... ansprechen, die jeweils zu verschiedenen so genannten Trust-Centern gehören können. Beispielsweise gehört das ID-Provider-Computersystem 136 zu dem Trust-Center A und das im Prinzip gleich strukturierte ID-Provider-Computersystem 136' zu einem anderen Trust-Center B.

In dem Konfigurationsdatensatz 158, der auch als ID-Container bezeichnet wird, ist die Attributmenge der Attribute i = 1 bis i = 4 definiert. Diesen Attributen ist jeweils die Datenquelle "Personalausweis", d.h. der ID-Token 106 zugeordnet, sowie das Trust-Center A, d.h. das ID-Provider-Computersystem 136. Dieses kann beispielsweise in Form seiner URL in dem Konfigurationsdatensatz 158 spezifiziert sein.

In dem Konfigurationsdatensatz 116 ist dagegen eine Attributmenge I, II und III definiert. Als Datenquelle für diese Attribute ist jeweils die Kreditkarte, d.h. der ID-Token 106', angegeben. Der ID-Token 106' hat einen geschützten Speicherbereich 124', in dem die Attribute I, II, III, ... gespeichert sind. Bei dem Attribut I kann es sich zum Beispiel um den Namen des Inhabers der Kreditkarte, bei dem Attribut II um die Kreditkartennummer und bei dem Attribut III um die Gültigkeitsdauer der Kreditkarte handeln, etc.

Als ID-Provider-Computersystem ist in dem Konfigurationsdatensatz 160 das ID-Provider-Computersystem 136' des Trust-Centers B angegeben.

Alternativ zu der in der Figur 3 gezeigten Ausführungsform können in demselben Konfigurationsdatensatz für verschiedene Attribute auch verschiedene Datenquellen und/oder verschiedene ID-Provider-Computersysteme angegeben sein.

In der Ausführungsform der Figur 3 kann jedes der ID-Provider-Computersysteme 136, 136',... jeweils mehrere Zertifikate haben.

Beispielsweise sind in dem Speicher 140 des ID-Provider-Computersystems 136, der in der Figur 3 exemplarisch gezeigt ist, mehrere Zertifikate, wie zum Beispiel die Zertifikate 144.1 und 144.2 mit den jeweils zugeordneten privaten Schlüsseln 142.1 und 142.2 gespeichert. In dem Zertifikat 144.1 sind Leserechte des ID-Provider-Computersystems 136 auf die Attribute i = 1 bis i = 4 definiert, wohingegen in dem Zertifikat 144.2 Leserechte auf die Attribute I bis III definiert sind.

Zur Inanspruchnahme eines von dem Dienst-Computersystem 150 angebotenen Dienstes tätigt der Nutzer 102 zunächst eine Nutzereingabe 162 in das Nutzer-Computersystem 100, um beispielsweise in eine Webseite des Dienst-Computersystems 150 seine Anforderung für den gewünschten Dienst einzugeben. Diese Dienst-Anforderung 164 wird von dem Nutzer-Computersystem 100 über das Netzwerk 116 an das Dienst-Computersystem 150 übertragen. Das Dienst-Computersystem 150 antwortet darauf mit einer Attributspezifizierung 166, d.h. mit einer Spezifizierung derjenigen Attribute, welche das Dienst-Computersystem 150 zur Bearbeitung der Dienst-Anforderung 164 von dem Nutzer 102 benötigt, sowie einer TAN. Die Attributspezifizierung kann beispielsweise in Form der Attributnamen erfolgen, wie zum Beispiel "Name", "Vorname", "Adresse", "Kreditkartennummer".

Der Empfang der Attributspezifizierung 166 wird dem Nutzer 102 durch das Nutzer-Computersystem 100 signalisiert. Der Nutzer 102 kann daraufhin einen oder erforderlichenfalls mehrere der Konfigurationsdatensätze 158, 160, ... auswählen, die jeweils Attributmengen definieren, welche die Attribute gemäß der Attributspezifizierung 166 zumindest als Teilmenge beinhalten.

Verlangt der Attributspezifizierung 166 beispielsweise lediglich die Mitteilung des Namens, des Vornamens und der Adresse des Nutzers 102, so kann der Nutzer 102 den Konfigurationsdatensatz 158 auswählen. Wird dagegen zusätzlich in der Attributspezifizierung 166 die Kreditkartennummer spezifiziert, so kann der Nutzer 102 zusätzlich den Konfigurationsdatensatz 160 auswählen. Dieser Vorgang kann auch vollautomatisch durch das Nutzer-Computersystem 100, beispielsweise durch Ausführung der Programminstruktionen 112, durchgeführt werden.

Im Weiteren wird zunächst davon ausgegangen, dass nur eine der Konfigurationsdatensätze, wie zum Beispiel der Konfigurationsdatensatz 158, aufgrund der Attributspezifizierung 166 ausgewählt wird.

Das Nutzer-Computersystem 100 sendet daraufhin eine Anforderung 168 an das oder die in dem gewählten Konfigurationsdatensatz angegebene ID-Provider-Computersysteme, in dem betrachteten Beispiel an das ID-Provider-Computersystem 136 des Trust-Centers A. Diese Anforderung 168 beinhaltet eine Angabe der von dem ID-Provider-Computersystem 136 aus der in dem Konfigurationsdatensatz 158 angegebenen Datenquelle auszulesenden Attribute gemäß der Attributspezifizierung 166.

Das ID-Provider-Computersystem 136 wählt daraufhin eines oder mehrerer seiner Zertifikate aus, welche die zum Lesen dieser Attribute erforderlichen Leserechte aufweisen. Wenn beispielsweise die Attribute i = 1 bis 3 aus dem Personalausweis gelesen werden sollen, so wählt das ID-Provider-Computersystem 136 sein Zertifikat 144.1 aus, welches die dafür erforderlichen Leserechte definiert. Diese Auswahl des Zertifikats wird durch Ausführung der Programminstruktionen 149 durchgeführt.

Daraufhin wird die Ausführung des kryptographischen Protokolls gestartet. Beispielsweise sendet das ID-Provider-Computersystem 136 hierzu eine Antwort an das Nutzer-Computersystem 100. Das Nutzer-Computersystem 100 fordert daraufhin den Nutzer 102 zu seiner Authentifizierung gegenüber der spezifizierten Datenquelle, d.h. hier gegenüber dem Personalausweis, auf.

Der Nutzer 102 bringt daraufhin seinen Personalausweis, d.h. den ID-Token 106, in den Bereich des RFID-Lesegeräts 104, und gibt beispielsweise seine PIN zu seiner Authentifizierung ein. Durch die erfolgreiche Authentifizierung des Nutzers 102 gegenüber dem ID-Token 106 wird dieser für die Durchführung des kryptographischen Protokolls, d.h. für die Durchführung der Programminstruktionen 134 freigeschaltet. Im Weiteren authentifiziert sich das ID-Provider-Computersystem 136 gegenüber dem ID-Token 106 mit Hilfe des ausgewählten Zertifikats 144.1, beispielsweise mit Hilfe eines Challenge-Response-Verfahrens. Diese Authentifizierung kann auch gegenseitig sein. Nach erfolgreicher Authentifizierung des ID-Provider-Computersystems 136 gegenüber dem ID-Token 106 richtet das ID-Provider-Computersystem eine Leseanforderung zum Lesen der erforderlichen Attribute an das Nutzer-Computersystem 100, welche dieses über das RFID-Lesegerät 104 an den ID-Token 106 weiterleitet. Der ID-Token 106 prüft anhand des Zertifikats 144.1, ob das ID-Provider-Computersystem 136 die dafür erforderlichen Leserechte hat. Wenn dies der Fall ist, werden die gewünschten Attribute aus dem geschützten Speicherbereich 124 ausgelesen und mittels Ende-zu-Ende-Verschlüsselung an das ID-Provider-Computersystem über das Nutzer-Computersystem 100 übertragen.

Das ID-Provider-Computersystem 136 sendet dann eine Antwort 170, die die ausgelesenen Attribute, einen Zeitstempel und die TAN beinhaltet, über das Netzwerk 116 an das Dienst-Computersystem 150. Die Antwort 170 ist mit dem Zertifikat 144.1 digital signiert.

Alternativ sendet das ID-Provider-Computersystem 136 die Antwort 170 an das Nutzer-Computersystem 100. Der Nutzer 102 erhält daraufhin die Möglichkeit, die in der Antwort 170 beinhalteten Attribute zu lesen und zu entscheiden, ob er diese Attribute wirklich an das Dienst-Computersystem 150 weiterleiten möchte oder nicht. Erst nach Eingabe eines Freigabekommandos des Nutzers 102 in das Nutzer-Computersystem 100 wird dann die Antwort 170 an das Dienst-Computersystem 150 weitergeleitet. Bei dieser Ausführungsform ist es ferner möglich, dass der Nutzer 102 die Antwort 170 um weitere Daten ergänzt.

Wenn mehrere ID-Provider-Computersysteme 136, 136', ... involviert sind, so können die einzelnen Antworten der ID-Provider-Computersysteme durch das Nutzer-Computersystem 100 in einer einzigen Antwort, die sämtliche der Attribute gemäß Attributspezifizierung 166 beinhalten, zusammengefasst werden, welche dann von dem Nutzer-Computersystem 100 an das Dienst-Computersystem 150 gesendet wird.

Nach einer Ausführungsform der Erfindung kann der Nutzer 102 anlässlich der Dienstanforderung 164 ein oder mehrerer seiner Attribute gegenüber dem Dienst-Computersystem 150 offenbaren, beispielsweise indem diese Attribute des Nutzers als Teil der Dienstanforderung 164 über das Netzwerk 116 an das Dienst-Computersystem übertragen werden. Insbesondere kann der Nutzer 102 diese Attribute in die Webseite des Dienst-Computersystems 150 eingeben. Die Richtigkeit dieser Attribute wird dann durch die Antwort 170 bestätigt, d.h. das Dienst-Computersystem 150 kann die von dem Nutzer 102 empfangenen Attribute mit den von dem ID-Provider-Computersystem 136 aus dem ID-Token 106 ausgelesenen Attribute vergleichen und auf Übereinstimmung prüfen.

Nach einer weiteren Ausführungsform der Erfindung kann auch zumindest ein weiteres Attribut in der Attributspezifizierung 166 angegeben sein, welches nicht auf einem der ID-Token des Nutzers 102 gespeichert ist, sondern von einer externen Datenquelle abfragbar ist. Hierbei kann es sich z.B. um ein Attribut betreffend die Kreditwürdigkeit des Nutzers 102 handeln. Das Nutzer-Computersystem 100 kann hierzu einen weiteren Konfigurationsdatensatz 161 beinhalten, welcher für das Attribut A - z.B. die Kreditwürdigkeit - die Angabe einer Datenquelle und eines ID-Provider-Computersystems beinhaltet. Bei der Datenquelle kann es sich um eine Online Auskunftei, wie z.B. Schufa, Dun & Bradstreet oder dergleichen handeln. Als ID-Provider-Computersystem ist beispielsweise ein Trust Center C angegeben, wie in der Ausführungsform der Fig. 3. Die Datenquelle kann sich hier in dem Trust Center C befinden.

Um das Attribut A abzufragen richtet also das Nutzer-Computersystem 100 eine entsprechende Anforderung (in der Fig. 3 nicht gezeigt) an das Trust Center C, d.h. das ID-Provider-Computersystem 136". Dieses liefert daraufhin das Attribut A, welches das Nutzer-Computersystem 100 zusammen mit den weiteren Attributen, die aus dem oder den ID-Token des Nutzers 102 ausgelesen wurden, an das Dienst-Computersystem 150 weiterleitet.

Vorzugsweise erfolgt die Abfrage des Attributs A nachdem die die digitale Identität des Nutzer 102 betreffenden Attribute bereits aus einem der ID-Token des Nutzers 102 abgefragt worden sind, und beispielsweise als signierte Antwort 170 von dem Nutzer-Computersystem 100 empfangen worden sind. Die Abfrage des Attributs A durch das Nutzer-Computersystem 100 von dem ID-Provider-Computersystem 136" beinhaltet dann die signierte Antwort 170, so dass das ID-Provider-Computersystem 136" hinsichtlich der Identität des Nutzers 102 ein sichere Information hat.

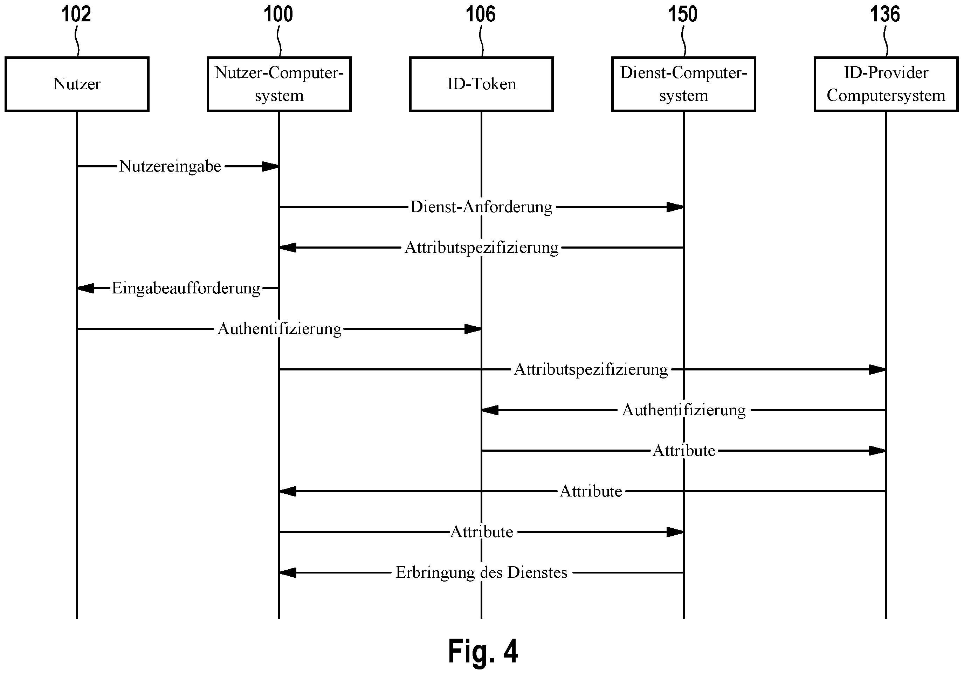

Die Figur 4 zeigt eine weitere Ausführungsform eines erfindungsgemäßen Verfahrens. Durch eine Nutzereingabe eines Nutzers 102 in ein Nutzer-Computersystem 100 spezifiziert der Nutzer 102 einen Dienst eines Dienst-Computersystems, welchen er oder sie in Anspruch nehmen möchte. Dies erfolgt beispielsweise durch Aufruf einer Internetseite des Dienst-Computersystems und einer Auswahl eines der dort angebotenen Dienste. Die Dienst-Anforderung des Nutzers 102 wird von dem Nutzer-Computersystem 100 an das Dienst-Computersystem 150 übertragen.

Das Dienst-Computersystem 150 antwortet auf die Dienst-Anforderung mit einer Attributspezifizierung, d.h. beispielsweise einer Liste von Attributnamen, und einer TAN. Nach Empfang der Attributspezifizierung fordert das Nutzer-Computersystem 100 den Nutzer 102, beispielsweise durch eine Eingabeaufforderung, zur Authentifizierung gegenüber dem ID-Token 106 auf.

Der Nutzer 102 authentifiziert sich daraufhin gegenüber dem ID-Token 106, beispielsweise durch Eingabe seiner PIN. Nach erfolgreicher Authentifizierung wird die Attributspezifizierung von dem Nutzer-Computersystem 100 an ein ID-Provider-Computersystem 136 weitergeleitet. Dieses authentifiziert sich daraufhin gegenüber dem ID-Token 106 und richtet eine Leseanforderung zum Lesen der Attribute gemäß der Attributspezifizierung an den ID-Token 106.

Unter der Voraussetzung der vorherigen erfolgreichen Authentifizierung des Nutzers 102 und des ID-Provider-Computersystems 136 antwortet der ID-Token 106 auf die Leseanforderung mit den gewünschten Attributen. Das ID-Provider-Computersystem 136 signiert die Attribute und sendet die signierten Attribute zusammen mit einem Zeitstempel und der TAN an das Nutzer-Computersystem 100. Nach Freigabe durch den Nutzer 102 werden die signierten Attribute mit dem Zeitstempel und der TAN dann an das Dienst-Computersystem 150 übertragen, welches dann ggf. den gewünschten Dienst erbringen kann, wenn die Attribute die dafür erforderlichen Kriterien erfüllen, wenn die Signatur valide ist und wenn die Attribute innerhalb der Gültigkeitsdauer, die durch den Zeitstempel gegeben ist, von dem Dienst-Computersystem 150 empfangen werden.

### Bezugszeichenliste

- 100: Nutzer-Computersystem
- 102: Nutzer
- 104: Schnittstelle
- 106: ID-Token
- 108: Schnittstelle
- 110: Prozessor
- 112: Programminstruktionen
- 114: Netzwerk-Schnittstelle
- 116: Netzwerk
- 118: elektronischer Speicher
- 120: geschützter Speicherbereich
- 122: geschützter Speicherbereich
- 124: geschützter Speicherbereich
- 126: Speicherbereich
- 128: Prozessor
- 130: Programminstruktionen
- 132: Programminstruktionen
- 134: Programminstruktionen
- 136: ID-Provider-Computersystem
- 138: Netzwerk-Schnittstelle
- 140: Speicher
- 142: privater Schlüssel
- 144: Zertifikat
- 145: Prozessor
- 146: Programminstruktionen
- 148: Programminstruktionen
- 149: Programminstruktionen
- 150: Dienst-Computersystem
- 152: Netzwerk-Schnittstelle
- 154: Prozessor
- 156: Programminstruktionen
- 158: Konfigurationsdatensatz
- 160: Konfigurationsdatensatz
- 161: Konfigurationsdatensatz
- 162: Nutzereingabe
- 164: Dienst-Anforderung
- 166: Attributspezifizierung
- 168: Anforderung
- 170: Antwort
- 172: Programminstruktionen
- 174: Zeitbasis
- 176: Programminstruktionen
- 178: Programminstruktionen
- 180: Programminstruktionen
- 182: Zeitbasis
- 184: Speicher
- 186: Tabelle
- 188: Attribute

## Patentansprüche

1. Verfahren zum Lesen zumindest eines in einem ID-Token (106, 106') gespeicherten Attributs, wobei der ID-Token einem Nutzer (102) zugeordnet ist, mit folgenden Schritten:
- Authentifizierung des Nutzers gegenüber dem ID-Token,
- Authentifizierung eines ersten Computersystems (136) gegenüber dem ID-Token,
- nach erfolgreicher Authentifizierung des Nutzers und des ersten Computersystems gegenüber dem ID-Token, Lesezugriff des ersten Computersystems auf das zumindest eine in dem ID-Token gespeicherte Attribut zur Übertragung des zumindest einen Attributs nach dessen Signierung durch das erste Computersystem unter Verwendung eines privaten Schlüssels des ersten Computersystems, einer Zeitangabe und einer Transaktionskennung an ein zweites Computersystem (150), wobei die Erzeugung der Zeitangabe für das zumindest eine Attribut durch das erste Computersystem erfolgt, wobei das zumindest eine Attribut, die Zeitangabe und die Transaktionskennung gemeinsam oder jeweils separat durch das erste Computersystem signiert sind,
- Übertragung des zumindest einen Attributs, der Zeitangabe, der Transaktionskennung an das zweite Computersystem,
- Prüfung der Validität der gemeinsamen Signatur oder der separaten Signaturen des zumindest einen Attributs, der Zeitangabe und der Transaktionskennung durch das zweite Computersystem,
- Prüfung anhand der Zeitangabe, ob das zumindest eine Attribut noch gültig ist durch das zweite Computersystem
- Durchführung einer Transaktion durch das zweite Computersystem, unter der Voraussetzung, dass die gemeinsame Signatur oder die separaten Signaturen valide sind und das zumindest eine Attribut gültig ist.

2. Verfahren nach Anspruch 1, wobei die Authentifizierung des ersten Computersystems gegenüber dem ID-Token mit Hilfe eines Zertifikats (144) des ersten Computersystems erfolgt, wobei das Zertifikat eine Angabe derjenigen in dem ID-Token gespeicherten Attribute beinhaltet, für welche das erste Computersystem für den Lesezugriff berechtigt ist.

3. Verfahren nach Anspruch 2, wobei der ID-Token die Leseberechtigung des ersten Computersystems für den Lesezugriff auf zumindest eines der Attribute mit Hilfe des Zertifikats überprüft.

4. Verfahren nach einem der Ansprüche 1, 2 oder 3, mit folgenden weiteren Schritten:
- Senden einer Anforderung (164) von einem dritten Computersystem (100) an das zweite Computersystem,
- Spezifizierung eines oder mehrerer Attribute durch das zweite Computersystem,
- Senden der Attributspezifizierung (166) von dem zweiten Computersystem an das erste Computersystem, wobei die Attributspezifizierung eine Transaktionskennung beinhaltet,
wobei der Lesezugriff des ersten Computersystems erfolgt, um die in der Attributspezifizierung spezifizierten ein oder mehrere Attribute aus dem ID-Token auszulesen, wobei das zweite Computersystem das von dem ersten Computersystem empfangene Attribut anhand der Transaktionskennung der Attributspezifizierung zuordnet,
wobei die Anforderung (164) vorzugsweise einen Identifikator zur Identifizierung des ersten Computersystems durch das zweite Computersystem beinhaltet, und wobei die Übertragung der Attributspezifikation von dem zweiten Computersystem an das erste Computersystem ohne Zwischenschaltung des dritten Computersystems erfolgt.

5. Verfahren nach Anspruch 4, wobei das dritte Computersystem mehrere vordefinierte Konfigurationsdatensätze (158, 160,...) aufweist, wobei jeder der Konfigurationsdatensätze eine Teilmenge der Attribute, zumindest eine Datenquelle und ein erstes Computersystem aus einer Menge von ersten Computersystemen (136, 136',...) spezifiziert, wobei die Attributspezifikation von dem zweiten Computersystem zunächst an das dritte Computersystem übertragen wird, sodass mittels des dritten Computersystems zumindest einer der Konfigurationsdatensätze ausgewählt wird, der eine Teilmenge der Attribute spezifiziert, welche das zumindest eine in der Attributspezifikation spezifizierte Attribut beinhaltet, und wobei das dritte Computersystem die Attributspezifikation an das erste Computersystem weiterleitet, und wobei eine Verbindung zwischen dem ersten Computersystem und dem mit dem durch die Angabe der Datenquelle in dem ausgewählten Konfigurationsdatensatz spezifizierten ID-Token über das dritte Computersystem aufgebaut wird.

6. Verfahren nach einem der vorhergehenden Ansprüche, wobei das zumindest eine von dem ersten Computersystem aus dem ID-Token gelesene Attribut an das dritte Computersystem gesendet wird, von wo es nach Freigabe durch den Nutzer an das zweite Computersystem weitergeleitet wird, und
wobei der Nutzer die Attribute vorzugsweise vor der Weiterleitung an das zweite Computersystem durch weitere Daten ergänzen kann, und wobei das erste Computersystem vorzugsweise mehrere der Zertifikate (144.1; 144.2) mit unterschiedlichen Leserechten aufweist, wobei das erste Computersystem aufgrund des Empfangs der Attributspezifizierung zumindest eines der Zertifikate auswählt, welches die zum Lesen der in der Attributspezifizierung spezifizierten Attribute ausreichenden Leserechte aufweist.

7. Verfahren nach einem der vorhergehenden Ansprüche, wobei das dritte Computersystem zumindest einen Konfigurationsdatensatz (161) hat, welcher eine externe Datenquelle zur Abfrage eines weiteren Attributs (A) von dem dritten Computersystem über das Netzwerk (116) spezifiziert.

8. Verfahren nach Anspruch 7, wobei die Abfrage des weiteren Attributs erfolgt, nachdem das zumindest eine Attribut aus dem ID-Token ausgelesen worden ist, und nachdem das dritte Computersystem das zumindest eine signierte Attribut von dem ersten Computersystem empfangen hat, wobei die Abfrage das zumindest eine signierte Attribut beinhaltet.

9. Computerprogrammprodukt mit von einem Computersystem ausführbaren Instruktionen zur Durchführung eines Verfahrens nach einem der vorhergehenden Ansprüche.

10. Computersystem mit
- Mitteln (138) zum Empfang einer Attributspezifizierung (166) über ein Netzwerk (116), wobei die Attributspezifizierung zumindest ein Attribut spezifiziert,
- Mitteln (142, 144, 146) zur Authentifizierung gegenüber einem ID-Token (106),
- Mitteln zum Lesen des zumindest einen Attributs aus dem ID-Token über eine geschützte Verbindung,
- Mitteln zur Erzeugung einer Zeitangabe für das zumindest eine Attribut,
- Mitteln (144) zum gemeinsamen oder jeweils separaten Signieren des zumindest einen Attributs, der Zeitangabe und der Transaktionskennung, wobei das signierte Attribut zusammen mit der signierten Zeitangabe und der signierten Transaktionskennung gesendet wird, und mit
einem Dienst-Computersystem (150) zur Durchführung einer Transaktion, das folgendes beinhaltet
- Mittel zum Empfang des zumindest einen Attributs, der Zeitangabe und der Transaktionskennung, welche gemeinsam oder jeweils separat signiert sind,
- Mittel zur Zuordnung des zumindest einen empfangenen Attributs zu der Attributspezifizierung anhand der Transaktionskennung,
- Mitteln zur Prüfung der gemeinsamen Signatur oder der separaten Signaturen,
- Mitteln zur Prüfung der Gültigkeit des zumindest einen empfangenen Attributs anhand der Zeitangabe,
- Mitteln zur Durchführung der Transaktion, wobei die Transaktion nur durchgeführt wird, wenn die gemeinsame Signatur oder die separaten Signaturen valide sind und wenn das zumindest eine empfangene Attribut gültig ist.
wobei das Lesen des zumindest einen Attributs voraussetzt, dass sich ein dem ID-Token zugeordneter Nutzer und das Computersystem gegenüber dem ID-Token authentifiziert haben.

11. Computersystem nach Anspruch 10, mit Mitteln zur Generierung einer Anforderung an den Nutzer zur Authentifizierung gegenüber dem ID-Token aufgrund des Empfangs der Attributspezifikation.

12. Computersystem nach Anspruch 10 oder 11, wobei die Mittel (138) zum Empfang der Attributspezifikation von einem zweiten Computersystem ausgebildet sind, und mit Mitteln (138) zum Senden des zumindest einen aus dem ID-Token gelesenen Attributs an ein drittes Computersystem (100) zur Weiterleitung an das zweite Computersystem,
wobei die Attributspezifizierung vorzugsweise zumindest eine Transaktionskennung spezifiziert.

13. Computersystem nach einem der Ansprüche 10 bis 12, mit mehreren der Zertifikate (144.1; 144.2) unterschiedlicher Leserechte, wobei das Computersystem dazu ausgebildet ist, aufgrund des Empfangs der Attributspezifizierung zumindest eines der Zertifikate auszuwählen, welches die zum Lesen der in der Attributspezifizierung spezifizierten Attribute ausreichenden Leserechte aufweist.

14. Computersystem nach einem der Ansprüche 10 bis 13 mit
einem ID-Token, der folgendes beinhaltet
- einen geschützten Speicherbereich (124) zur Speicherung von zumindest einem Attribut,
- Mittel (120, 130) zur Authentifizierung eines dem ID-Token zugeordneten Nutzers (102) gegenüber dem ID-Token,
- Mittel (134) zur Authentifizierung eines ersten Computersystems (136) gegenüber dem ID-Token,
- Mittel (132) zum Aufbau einer geschützten Verbindung zu dem ersten Computersystem, über die das erste Computersystem das zumindest eine Attribut auslesen kann,
wobei eine notwendige Voraussetzung für das Auslesen des zumindest einen Attributs aus dem ID-Token durch das erste Computersystem die erfolgreiche Authentifizierung des Nutzers und des ersten Computersystems gegenüber dem ID-Token ist.

## Claims

1. A method for reading at least one attribute stored in an ID token (106, 106'), wherein the ID token is assigned to a user (102), the method having the following steps:
- authenticating the user to the ID token,
- authenticating a first computer system (136) to the ID token,
- after successful authentication of the user and the first computer system relative to the ID token, granting the first computer system read access to the at least one attribute stored in the ID token for transmission of the at least one attribute, after its signing by the first computer system with use of a private key of the first computer system, along with a time indication and a transaction identifier to a second computer system (150), wherein the time indication for the at least one attribute is generated by the first computer system, wherein the at least one attribute, the time indication and the transaction identifier are signed jointly or separately by the first computer system,
- transmitting the at least one attribute, the time indication and the transaction identifier to the second computer system,
- checking, by the second computer system, of the validity of the joint signature or the separate signatures of the at least one attribute, the time indication and the transaction identifier,
- checking, by the second computer system and with use of the time indication, whether the at least one attribute is still valid.

2. The method according to claim 1, wherein the step of authenticating the first computer system to the ID token is performed with the aid of a certificate (144), wherein the certificate contains a designation of those attributes stored in the ID token for which the first computer system is authorised for the read access.

3. The method according to claim 2, wherein the ID token checks the read authorisation of the first computer system for the read access to at least one of the attributes with the aid of the certificate.

4. The method according to any one of claims 1, 2 or 3, with the following further steps:
- sending a request (164) from a third computer system (100) to the second computer system,
- specifying, by the second computer system, of one or more attributes,
- sending the attribute specification (166) from the second computer system to the first computer system, wherein the attribute specification contains a transaction identifier,
wherein the read access of the first computer system takes place in order to read the one or more attributes specified in the attribute specification from the ID token, wherein the second computer system assigns the attribute received from the first computer system to the attribute specification on the basis of the transaction identifier,
wherein the request (164) preferably includes an identifier for identifying the first computer system by the second computer system, and wherein the attribute specification is transmitted from the second computer system to the first computer system without interconnection of the third computer system.

5. The method according to claim 4, wherein the third computer system has a plurality of predefined configuration data sets (158, 160, ...), wherein each of the configuration data sets specifies a subset of attributes, at least one data source, and a first computer system from a set of first computer systems (136, 136', ...), wherein the attribute specification from the second computer system is initially transmitted to the third computer system, such that by means of the third computer system at least one of the configuration data sets which specifies a subset of attributes containing the at least one attribute specified in the attribute specification is selected, and wherein the third computer system forwards the attribute specification to the first computer system, and wherein a connection is established between the first computer system and the ID token specified through the designation of the data source in the selected configuration data set via the third computer system.

6. The method according to any one of the preceding claims, wherein the at least one attribute read by the first computer system from the ID token is sent to the third computer system, from where it is forwarded to the second computer system after the user has released it, and
wherein the user can supplement the attributes with additional data preferably prior to forwarding to the second computer system, and wherein the first computer system preferably has a plurality of certificates (144.1; 144.2) with different read rights, wherein the first computer system, on the basis of the receipt of the attribute specification, selects at least one of the certificates having read rights sufficient to read the attributes specified in the attribute specification.

7. The method according to any one of the preceding claims, wherein the third computer system has at least one configuration data set (161), which specifies an external data source for querying a further attribute (A) from the third computer system via the network (116).

8. The method according to claim 7, wherein the query of the further attribute occurs after the at least one attribute has been read from the ID token, and after the third computer system has received the at least one signed attribute from the first computer system, wherein the query contains the at least one signed attribute.

9. A computer program product with instructions that can be carried out by a computer system for executing a method according to any one of the preceding claims.

10. A computer system comprising
- means (138) for receiving an attribute specification (166) via a network (116), wherein the attribute specification specifies at least one attribute,
- means (142, 144, 146) for authentication to an ID token (106),
- means for reading the at least one attribute from the ID token via a secure connection,
- means for generating a time indication for the at least one attribute,
- means (144) for joint or separate signing of the at least one attribute, the time indication and the transaction identifier, wherein the signed attribute is sent together with the signed time indication and the signed transaction identifier, and comprising
- a service computer system (150) for execution of a transaction, which contains the following
- means for receiving the at least one attribute, the time indication and the transaction identifier, which are signed jointly or separately,
- means for assigning the at least one received attribute to the attribute specification on the basis of the transaction identifier,
- means for checking the joint signature or the separate signatures,
- means for checking the validity of the at least one received attribute on the basis of the time indication,
- means for executing the transaction, wherein the transaction is executed only if the joint signature or the separate signatures is/are valid and if the at least one received attribute is valid,
wherein the reading of the at least one attribute presupposes that a user assigned to the ID token and the computer system have authenticated themselves to the ID token.

11. The computer system according to claim 10, comprising means for generating a request to the user for authentication to the ID token on the basis of the receipt of the attribute specification.

12. The computer system according to claim 10 or 11, wherein the means (138) for receiving the attribute specification are formed by a second computer system, and comprising means (138) for sending the at least one attribute read from the ID token to a third computer system (100) for forwarding to the second computer system,
wherein the attribute specification preferably specifies at least one transaction identifier.

13. The computer system according to any one of claims 10 to 12, comprising a plurality of certificates (144.1; 144.2) with different read rights, wherein the computer system is designed, on the basis of the receipt of the attribute specification, to select at least one of the certificates which has read rights sufficient for reading the attributes specified in the attribute specification.

14. The computer system according to any one of claims 10 to 13, comprising an ID token which contains the following:
- a protected memory area (124) for storing at least one attribute,
- means (120, 130) for authenticating to the ID token a user (102) assigned to the ID token,
- means (134) for authenticating a first computer system (136) to the ID token,
- means (132) for establishing a secure connection to the first computer system, via which connection the first computer system can read out the at least one attribute,
wherein a necessary prerequisite for reading out the at least one attribute from the ID token by the first computer system is the successful authentication of the user and the first computer system to the ID token.

## Revendications

1. Procédé de lecture d'au moins un attribut stocké dans un jeton d'ID (106, 106'), dans lequel le jeton d'ID est associé à un utilisateur (102), avec les étapes suivantes :
- l'authentification de l'utilisateur vis-à-vis du jeton d'ID,
- d'authentification d'un premier système informatique (136) vis-à-vis du jeton d'ID,
- après l'authentification réussie de l'utilisateur et du premier système informatique vis-à-vis du jeton d'ID, l'accès en lecture du premier système informatique de l'au moins un attribut stocké dans le jeton d'ID en vue de la transmission de l'au moins un attribut après sa signature par le premier système informatique, moyennant l'emploi d'une clé privée du premier système informatique, d'une indication horaire et d'un identifiant de transaction à un deuxième système informatique (150), où la création de l'indication horaire pour l'au moins un attribut a lieu par le premier système informatique, où l'au moins un attribut, l'indication horaire et l'identifiant de transaction sont signés collectivement ou respectivement de manière séparée par le premier système informatique,
- de transmission de l'au moins un attribut, de l'indication horaire, de l'identifiant de transaction au deuxième système informatique,
- de vérification de la validité de la signature commune ou des signatures séparées de l'au moins un attribut, de l'indication horaire et de l'identifiant de transaction par le deuxième système informatique,
- de vérification, à l'aide de l'indication horaire, si l'au moins un attribut est encore valable par le deuxième système informatique,
- d'exécution d'une transaction par le deuxième système informatique, à la condition que la signature commune ou les signatures séparées soient valides et que l'au moins un attribut est valable.

2. Procédé selon la revendication 1, dans lequel l'authentification du premier système informatique vis-à-vis du jeton d'ID a lieu à l'aide d'un certificat (144) du premier système informatique, où le certificat contient une indication des attributs en question stockés dans le jeton d'ID pour lesquels le premier système informatique est habilité pour un accès en lecture.

3. Procédé selon la revendication 2, dans lequel le jeton d'ID vérifie l'autorisation de lecture du premier système informatique pour l'accès en lecture de l'au moins un attribut à l'aide du certificat.

4. Procédé selon la revendication 1, la revendication 2 ou la revendication 3, avec les étapes suivantes :
- l'envoi d'une requête (164) d'un troisième système informatique (100) au deuxième système informatique,
- la spécification d'un ou de plusieurs attributs par le deuxième système informatique,
- l'envoi de la spécification d'attribut (166) du deuxième système informatique vers le premier système informatique, la spécification d'attribut contenant un identifiant de transaction,
où l'accès en lecture du premier système informatique a lieu pour lire un ou plusieurs attributs spécifiés dans la spécification d'attribut à partir du jeton d'ID, où le deuxième système informatique associe l'attribut reçu du premier système informatique à la spécification d'attribut à l'aide de l'identifiant de transaction,
où la requête (164) contient de préférence un identificateur pour l'identification du premier système informatique par le deuxième système informatique, et où la transmission de la spécification d'attribut a lieu du deuxième système informatique vers le premier système informatique sans interposition du troisième système informatique.

5. Procédé selon la revendication 4, dans lequel le troisième système informatique présente plusieurs ensembles de données de configuration (158, 160, ...) prédéfinis, où chacun des ensembles de données de configuration spécifie une quantité partielle des attributs, au moins une source de données et un premier système informatique parmi une quantité de premiers systèmes informatiques (136, 136', ...), où la spécification d'attribut est d'abord transmise du deuxième système informatique au troisième système informatique de sorte qu'au moins un des ensembles de données de configuration qui spécifie une quantité partielle des attributs est choisi au moyen du troisième système informatique, lesquels attributs sont contenus dans l'au moins un attribut spécifié dans la spécification d'attributs, et où le troisième système informatique retransmet la spécification d'attribut au premier système informatique et où une liaison entre le premier système informatique et le jeton d'ID spécifié dans l'ensemble de données de configuration choisi est établie par l'indication de la source de données par le biais du troisième système informatique.

6. Procédé selon l'une des revendications précédentes, dans lequel l'au moins un attribut lu à partir du jeton d'ID par le premier système informatique est envoyé au troisième système informatique, d'où il est retransmis après la libération par l'utilisateur au deuxième système informatique, et
où l'utilisateur peut de préférence compléter les attributs par d'autres données avant la retransmission au deuxième système informatique, et où le premier système informatique présente de préférence plusieurs des certificats (144.1 ; 144.2) avec des droits de lecture différents, où le premier système informatique choisit au moins un des attributs spécifiés suite à la réception de la spécification d'attribut, lequel présente les droits de lecture suffisants pour la lecture des attributs spécifiés dans la spécification d'attribut.

7. Procédé selon la revendication 1, dans lequel le troisième système informatique a au moins un ensemble de données de configuration (161), lequel spécifie une source de données extérieure pour l'interrogation d'un nouvel attribut (A) par le troisième système informatique par le biais du réseau (116).

8. Procédé selon la revendication 7, dans lequel l'interrogation du nouvel attribut a lieu après que l'au moins un attribut ait été lu à partir du jeton d'ID, et après que le troisième système informatique ait réceptionné l'au moins un attribut signé du premier système informatique, où l'interrogation contient l'au moins un attribut signé.

9. Produit-programme informatique doté d'instructions exécutables par un système informatique pour la réalisation d'un procédé selon l'une des revendications précédentes.

10. Système informatique avec
- des moyens (138) pour la réception d'une spécification d'attribut (166) par le biais d'un réseau (116), la spécification d'attribut spécifiant au moins un attribut,
- des moyens (142, 144, 146) pour l'authentification vis-à-vis d'un jeton d'ID (106),
- des moyens de lecture de l'au moins un attribut à partir du jeton d'ID par le biais d'une connexion sécurisée,
- des moyens pour la création d'une indication horaire pour l'au moins un attribut,
- des moyens (144) pour la signature collective ou respectivement séparée de l'au moins un attribut, de l'indication horaire et de l'identifiant de transaction, où l'attribut signé collectivement avec l'indication horaire signée et l'identifiant de transaction signé est envoyé, et doté
d'un système informatique de service (150) pour l'exécution d'une transaction, contient ce qui suit
- des moyens de réception de l'au moins un attribut, de l'indication horaire et de l'identifiant de transaction, lesquels sont signés collectivement ou respectivement de manière séparée,
- des moyens d'association de l'au moins un attribut réceptionné à la spécification d'attribut à l'aide de l'identifiant de transaction,
- des moyens de vérification de la signature collective ou des signatures séparées,
- des moyens de vérification de la validité de l'au moins un attribut reçu à l'aide de l'indication horaire,
- des moyens d'exécution de la transaction, où la transaction n'est effectuée que si la signature collective ou les signatures séparées sont valides et si l'au moins un attribut reçu est valable,
où la lecture de l'eau moins un attribut est conditionnée au fait que l'utilisateur associé au jeton d'ID et que l'ordinateur se soient authentifiés vis-à-vis du jeton d'ID.

11. Système informatique selon la revendication 10, doté de moyens de génération d'une demande d'authentification vis-à-vis du jeton d'ID de l'utilisateur suite à la réception de la spécification d'attribut.

12. Système informatique selon la revendication 10 ou la revendication 11, dans lequel les moyens (138) sont conçus pour la réception de la spécification d'attribut à partir d'un deuxième système informatique, et avec des moyens (138) pour l'envoi de l'au moins un attribut lu à partir du jeton d'ID à un troisième système informatique (100) pour la retransmission au deuxième système informatique,
où la spécification d'attribut spécifie de préférence au moins un identifiant de transaction.

13. Système informatique selon l'une des revendications 10 à 12, doté droits de lecture différents de plusieurs certificats (144.1 ; 144.2), le système informatique étant conçu, suite à la réception de la spécification d'attribut, pour choisir au moins l'un des certificats, lequel présente les droits de lecture suffisants pour la lecture des attributs spécifiés dans la spécification d'attribut.

14. Système informatique selon l'une des revendications 10 à 13, doté d'un jeton d'ID qui contient ce qui suit
- une zone de mémoire (124) sécurisée pour le stockage d'au moins un attribut,
- des moyens (120, 130) d'authentification d'un utilisateur (102) associé au jeton d'ID vis-à-vis du jeton d'ID,
- des moyens (134) d'authentification d'un premier système informatique (136) vis-à-vis du jeton d'ID,
- des moyens (132) d'établissement d'une connexion sécurisée vers le premier système informatique, par le biais desquels le premier système informatique peut lire l'au moins un attribut,
dans lequel une condition nécessaire pour la lecture de l'au moins un attribut à partir du jeton d'ID par le premier système informatique est l'authentification réussie de l'utilisateur et du premier système informatique vis-à-vis du jeton d'ID.
